# EUROPEAN PATENT SPECIFICATION

(11) **EP 4 464 096 B1**
(45) Date of publication and mention of the grant of the patent: **28.10.2026**
(21) Application number: 22946243.7
(22) Date of filing: 16.06.2022
(51) Int. Cl.: H04W 72/04, H04B 7/06, H04L 5/00, H04L 27/26

(54) **PHASE TRACKING REFERENCE SIGNAL FOR UPLINK TRANSMISSION WITH 8 ANTENNA PORTS**
PHASENNACHFÜHRUNGSREFERENZSIGNAL FÜR UPLINK-ÜBERTRAGUNG MIT 8 ANTENNENPORTS
SIGNAL DE RÉFÉRENCE DE SUIVI DE PHASE POUR TRANSMISSION EN LIAISON MONTANTE AVEC 8 PORTS D'ANTENNE

(43) Date of publication of application: 20.11.2024
(73) Proprietor: Lenovo (Beijing) Limited, Beijing 100085 (CN)
(72) Inventor: LIU, Bingchao, Beijing 100094 (CN); ZHU, Chenxi, Fairfax, Virginia 22033 (US)
(74) Representative: Openshaw & Co.
(86) International application number: PCT/CN2022/099234
(87) International publication number: WO 2023/240554

(56) References cited:
- WO-A1-2021/258401
- CN-A- 114 501 629
- US-A1- 2020 413 433
- US-A1- 2023 261 836
- NTT DOCOMO ET AL: "Discussion on 8TX UL transmission", vol. RAN WG1, no. e-Meeting; 20220509 - 20220520, 29 April 2022 (2022-04-29), XP052153501, Retrieved from the Internet <URL:https://ftp.3gpp.org/tsg_ran/WG1_RL1/TSGR1_109-e/Docs/R1-2204373.zip R1-2204373.docx> [retrieved on 20220429]
- SAMSUNG: "Issues on PTRS", vol. RAN WG1, no. Vancouver, Canada; 20170122 - 20170126, 12 January 2018 (2018-01-12), XP051384334, Retrieved from the Internet <URL:http://www.3gpp.org/ftp/tsg%5Fran/WG1%5FRL1/TSGR1%5FAH/NR%5FAH%5F1801/Docs/> [retrieved on 20180112]
- ANONYMOUS: "3rd Generation Partnership Project; Technical Specification Group Radio Access Network; NR; Physical layer procedures for data (Release 15)", 3GPP TS 38.214 V15.0.1 TECHNICAL SPECIFICATION, no. V15.0.1, 28 February 2018 (2018-02-28), XP009551708

## Description

### FIELD

The subject matter disclosed herein generally relates to wireless communications, and more particularly relates to methods and apparatuses for PT-RS enhancement.

### BACKGROUND

The following abbreviations are herewith defined, at least some of which are referred to within the following description: New Radio (NR), Very Large Scale Integration (VLSI), Random Access Memory (RAM), Read-Only Memory (ROM), Erasable Programmable Read-Only Memory (EPROM or Flash Memory), Compact Disc Read-Only Memory (CD-ROM), Local Area Network (LAN), Wide Area Network (WAN), User Equipment (UE), Evolved Node B (eNB), Next Generation Node B (gNB), Uplink (UL), Downlink (DL), Central Processing Unit (CPU), Graphics Processing Unit (GPU), Field Programmable Gate Array (FPGA), Orthogonal Frequency Division Multiplexing (OFDM), Radio Resource Control (RRC), User Entity/Equipment (Mobile Terminal), Transmitter (TX), Receiver (RX), Phase Tracking Reference Signal (PT-RS), Physical Uplink Shared Channel (PUSCH), FR2 (frequency range 2: 24250MHz~52600MHz), Demodulation Reference Signal (DMRS), codebook (CB), non-codebook (nCB), Bandwidth part (BWP), Sounding Reference Signal (SRS), Channel State Information Reference Signal (CSI-RS), Transmission Configuration Indicator (TCI), Downlink Control Information (DCI), Most Significant Bit (MSB), Least Significant Bit (LSB), SRS resource indicator (SRI), Transmit Precoding Matrix Indicator (TPMI).

Phase tracking reference signal (PT-RS) is required for PUSCH transmission in FR2 for phase noise estimation. One or two PT-RS ports are designed in NR Release 15 for PUSCH transmission in FR2 with 4 antenna ports, where each PT-RS port is associated with one DMRS port.

PUSCH transmission with 8 antenna ports shall be supported in NR Release 18 for high power device. PT-RS should be enhanced to support PUSCH transmission with 8 antenna ports in FR2.

This disclosure targets PT-RS enhancement for PUSCH transmission with 8 antenna ports.

D1 (CN114501629A) is a published Chinese patent application and relates to a resource configuration method, apparatus, device, and readable storage medium.

D2 (R1-2204373) is a 3GPP discussion document titled "Discussion on 8TX UL transmission", submitted by NTT Docomo Inc. at TSG RAN WG1 #109-e, an e-Meeting started on 9th May 2022, and relates to the performance evaluations of 8 Transmit Uplink (8TX UL) transmission, and potential enhancements to support 8TX UL transmission.

D3 (R1-1800438) is a 3GPP discussion document titled "Issues on PTRS", submitted by Samsung Inc. at TSG RAN WG1 AH1801, a meeting held in Vancouver, Canada started on 22nd January 2017, and relates to some clarifications and corrections of PT-RS issues.

### BRIEF SUMMARY

Methods and apparatuses for PT-RS enhancement are disclosed. The invention is defined by the appended claims.

In one embodiment, a UE comprises a transceiver; and a processor coupled to the transceiver, wherein the processor is configured to report, via the transceiver, a capability on supported maximum number of PT-RS port(s) when 8 antenna ports are equipped by the UE, wherein, the supported maximum number of PT-RS port(s) is equal to or smaller than the number of coherent groups for the 8 antenna ports, where all antenna ports within a same coherent group are coherent and antenna ports from different coherent groups are non-coherent; and receive, via the transceiver, a configuration to configure one or multiple PT-RS ports according to the supported maximum number of PT-RS port(s).

In some embodiment, if the number of coherent groups for the 8 antenna ports is 1, the reported supported maximum number of the PT-RS port(s) is 1; if the number of coherent groups for the 8 antenna ports is 2, the reported supported maximum number of the PT-RS port(s) is 1 or 2; if the number of coherent groups for the 8 antenna ports is 4, the reported supported maximum number of the PT-RS port(s) is 1 or 2 or 4; and if the number of coherent groups for the 8 antenna ports is 8, the reported supported maximum number of the PT-RS port(s) is 1 or 2 or 4 or 8.

In some embodiment, if the reported supported maximum number of the PT-RS port(s) is 1, the configuration configures one PT-RS port, if the reported supported maximum number of the PT-RS port(s) is 2, the configuration configures one or two PT-RS ports, if the reported supported maximum number of the PT-RS port(s) is 4, the configuration configures one or two or four PT-RS ports, and if the reported number of the coherent groups is 8, the configuration configures one or two or four or eight PT-RS ports.

If the configuration configures one PT-RS port, the 8 antenna ports share the one PT-RS port, and the one PT-RS port is associated with one of the indicated DMRS port(s) according to the value of a 3-bits *PT-RS-DMRS association* field based on a predetermined first table.

If the configuration configures a first PT-RS port and a second PT-RS port, if there are two coherent groups, each of which consists of 4 antenna ports, the 4 antenna ports within a first coherent group share the first PT-RS port and the antenna ports within a second coherent group share the second PT-RS port, if there are four coherent groups, each of which consists of 2 antenna ports, the 4 antenna ports within a first coherent group and a second coherent group share the first PT-RS port and the 4 antenna ports within a third coherent group and a fourth coherent group share the second PT-RS port, if there are eight coherent groups, each of which consists of 1 antenna port, the 4 antenna ports within a first coherent group, a second coherent group, a third coherent group and a fourth coherent group share the first PT-RS port and the 4 antenna ports within a fifth coherent group, a sixth coherent group, a seventh coherent group and an eighth coherent group share the second PT-RS port, the first PT-RS port is associated with one of the indicated DMRS port(s) sharing the first PT-RS port according to the value of the first two bits of a 4-bits *PT-RS-DMRS association* field based on a predetermined second table, and the second PT-RS port is associated with one of the indicated DMRS port(s) sharing the second PT-RS port according to the value of the last two bits of the 4-bits *PT-RS-DMRS association* field based on the predetermined second table.

If the configuration configures a first PT-RS port, a second PT-RS port, a third PT-RS port and a fourth PT-RS port, if there are four coherent groups, each of which consists of 2 antenna ports, then, the 2 antenna ports within a first coherent group share the first PT-RS port, the 2 antenna ports within a second coherent group share the second PT-RS port, the 2 antenna ports within a third coherent group share the third PT-RS port, and the 2 antenna ports within a fourth coherent group share the fourth PT-RS port, if there are eight coherent groups, each of which consists of 1 antenna port, then, the 2 antenna ports within a first coherent group and a second coherent group share the first PT-RS port, the 2 antenna ports within a third coherent group and a fourth coherent group share the second PT-RS port, the 2 antenna ports within a fifth coherent group and a sixth coherent group share the third PT-RS port, and the 2 antenna ports within a seventh coherent group and an eighth coherent group share the fourth PT-RS port, the first PT-RS port is associated with one of the indicated DMRS port(s) sharing the first PT-RS port according to the value of a first bit of a 4-bits *PT-RS-DMRS association* field based on a predetermined third table, the second PT-RS port is associated with one of the indicated DMRS port(s) sharing the second PT-RS port according to the value of a second bit of the 4-bits *PT-RS-DMRS association* field based on the predetermined third table, the third PT-RS port is associated with one of the indicated DMRS port(s) sharing the third PT-RS port according to the value of a third bit of the 4-bits *PT-RS-DMRS association* field based on the predetermined third table, the fourth PT-RS port is associated with one of the indicated DMRS port(s) sharing the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the processor is further configured to receive, via the transceiver, an SRS configuration of one SRS resource set for non-codebook, wherein the one SRS resource set consists of up to 8 SRS resources, each SRS resource is configured with a PT-RS port, if the configuration configures one PT-RS port, all SRS resources within the one SRS resource set share the one PT-RS port, and the one PT-RS port is associated with one of the indicated DMRS ports according to the value of a 3-bits *PT-RS-DMRS association* field based on a predetermined first table, if the configuration configures a first PT-RS port and a second PT-RS port, each of the first PT-RS port and the second PT-RS port is shared by up to 4 SRS resources within the one SRS resource set, the first PT-RS port is associated with one of the indicated DMRS port(s) mapped to the SRS resources indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, each of the first PT-RS port, the second PT-RS port, the third PT-RS port and the fourth PT-RS port is shared by up to 2 SRS resources within the one SRS resource set, the first PT-RS port is associated with one of the indicated DMRS port(s) mapped to the SRS resources indicated with the first PT-RS port according to the value of a first bit of a 4-bits *PT-RS-DMRS association* field based on a predetermined third table, the second PT-RS port is associated with one of the indicated DMRS port(s) mapped to the SRS resources indicated with the second PT-RS port according to the value of a second bit of the 4-bits *PT-RS-DMRS association* field based on the predetermined third table, the third PT-RS port is associated with one of the indicated DMRS port(s) mapped to the SRS resources indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the processor is further configured to receive, via the transceiver, an SRS configuration of multiple SRS resource sets for non-codebook, wherein the number of SRS resource sets for non-codebook is equal to the supported maximum number of PT-RS port(s), all SRS resources within the same SRS resource set for non-codebook share a same PT-RS port, if the configuration configures one PT-RS port, the one PT-RS port is associated with one of the indicated DMRS ports according to the value of a 3-bits *PT-RS-DMRS association* field based on a predetermined first table, if the configuration configures a first PT-RS port and a second PT-RS port, the first PT-RS port is associated with one of the indicated DMRS port(s) mapped to the SRS resources within the SRS resource set indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources within the SRS resource set indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, the first PT-RS port is associated with one of the indicated DMRS port(s) mapped to the SRS resources within the SRS resource set indicated with the first PT-RS port according to the value of a first bit of a 4-bits *PT-RS-DMRS association* field based on a predetermined third table, the second PT-RS port is associated with one of the indicated DMRS port(s) mapped to the SRS resources within the SRS resource set indicated with the second PT-RS port according to the value of a second bit of the 4-bits *PT-RS-DMRS association* field based on the predetermined third table, the third PT-RS port is associated with one of the indicated DMRS port(s) mapped to the SRS resources within the SRS resource set indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources within the SRS resource set indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.In another embodiment, a method performed at a UE comprises reporting a capability on supported maximum number of PT-RS port(s) when 8 antenna ports are equipped by the UE, wherein, the supported maximum number of PT-RS port(s) is equal to or smaller than the number of coherent groups for the 8 antenna ports, where all antenna ports within a same coherent group are coherent and antenna ports from different coherent groups are non-coherent; and receiving a configuration to configure one or multiple PT-RS ports according to the supported maximum number of PT-RS port(s).

In still another embodiment, a base unit comprises a transceiver; and a processor coupled to the transceiver, wherein the processor is configured to receive, via the transceiver, a capability on supported maximum number of PT-RS port(s) from a UE equipped with 8 antenna ports, wherein, the supported maximum number of PT-RS port(s) is equal to or smaller than the number of coherent groups for the 8 antenna ports, where all antenna ports within a same coherent group are coherent and different antenna ports from different coherent groups are non-coherent; and transmit, via the transceiver, to the UE, a configuration to configure one or multiple PT-RS ports according to the supported maximum number of PT-RS port(s).

In some embodiment, if the supported maximum number of the PT-RS port(s) is 1, the number of coherent groups for the 8 antenna ports is 1 or 2 or 4 or 8; if the supported maximum number of the PT-RS port(s) is 2, the number of coherent groups for the 8 antenna ports is 2 or 4 or 8; if the supported maximum number of the PT-RS port(s) is 4, the number of coherent groups for the 8 antenna ports is 4 or 8; and if the supported maximum number of the PT-RS port(s) is 8, the number of coherent groups for the 8 antenna ports is 8.

In some embodiment, if the supported maximum number of the PT-RS port(s) is 1, the configuration configures one PT-RS port, if the supported maximum number of the PT-RS port(s) is 2, the configuration configures one or two PT-RS ports, if the supported maximum number of the PT-RS port(s) is 4, the configuration configures one or two or four PT-RS ports, and if the number of the coherent groups is 8, the configuration configures one or two or four or eight PT-RS ports.

If the configuration configures one PT-RS port, the 8 antenna ports share the one PT-RS port, and the one PT-RS port is associated with one of the indicated DMRS port(s) according to the value of a 3-bits *PT-RS-DMRS association* field based on a predetermined first table.

If the configuration configures a first PT-RS port and a second PT-RS port, if there are two coherent groups, each of which consists of 4 antenna ports, the 4 antenna ports within a first coherent group share the first PT-RS port and the antenna ports within a second coherent group share the second PT-RS port, if there are four coherent groups, each of which consists of 2 antenna ports, the 4 antenna ports within a first coherent group and a second coherent group share the first PT-RS port and the 4 antenna ports within a third coherent group and a fourth coherent group share the second PT-RS port, if there are eight coherent groups, each of which consists of 1 antenna port, the 4 antenna ports within a first coherent group, a second coherent group, a third coherent group and a fourth coherent group share the first PT-RS port and the 4 antenna ports within a fifth coherent group, a sixth coherent group, a seventh coherent group and an eighth coherent group share the second PT-RS port, the first PT-RS port is associated with one of the indicated DMRS port(s) sharing the first PT-RS port according to the value of the first two bits of a 4-bits *PT-RS-DMRS association* field based on a predetermined second table, and the second PT-RS port is associated with one of the indicated DMRS port(s) sharing the second PT-RS port according to the value of the last two bits of the 4-bits *PT-RS-DMRS association* field based on the predetermined second table.

If the configuration configures a first PT-RS port, a second PT-RS port, a third PT-RS port and a fourth PT-RS port, if there are four coherent groups, each of which consists of 2 antenna ports, then, the 2 antenna ports within a first coherent group share the first PT-RS port, the 2 antenna ports within a second coherent group share the second PT-RS port, the 2 antenna ports within a third coherent group share the third PT-RS port, and the 2 antenna ports within a fourth coherent group share the fourth PT-RS port, if there are eight coherent groups, each of which consists of 1 antenna port, then, the 2 antenna ports within a first coherent group and a second coherent group share the first PT-RS port, the 2 antenna ports within a third coherent group and a fourth coherent group share the second PT-RS port, the 2 antenna ports within a fifth coherent group and a sixth coherent group share the third PT-RS port, and the 2 antenna ports within a seventh coherent group and an eighth coherent group share the fourth PT-RS port, the first PT-RS port is associated with one of the indicated DMRS port(s) sharing the first PT-RS port according to the value of a first bit of a 4-bits *PT-RS-DMRS association* field based on a predetermined third table, the second PT-RS port is associated with one of the indicated DMRS port(s) sharing the second PT-RS port according to the value of a second bit of the 4-bits *PT-RS-DMRS association* field based on the predetermined third table, the third PT-RS port is associated with one of the indicated DMRS port(s) sharing the third PT-RS port according to the value of a third bit of the 4-bits *PT-RS-DMRS association* field based on the predetermined third table, the fourth PT-RS port is associated with one of the indicated DMRS port(s) sharing the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the processor is further configured to transmit an SRS configuration of one SRS resource set for non-codebook, wherein the one SRS resource set consists of up to 8 SRS resources, each SRS resource is configured with a PT-RS port, if the configuration configures one PT-RS port, all SRS resources within the one SRS resource set share the one PT-RS port, and the one PT-RS port is associated with one of the indicated DMRS ports according to the value of a 3-bits *PT-RS-DMRS association* field based on a predetermined first table, if the configuration configures a first PT-RS port and a second PT-RS port, each of the first PT-RS port and the second PT-RS port is shared by up to 4 SRS resources within the one SRS resource set, the first PT-RS port is associated with one of the indicated DMRS port(s) mapped to the SRS resources indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, each of the first PT-RS port, the second PT-RS port, the third PT-RS port and the fourth PT-RS port is shared by up to 2 SRS resources within the one SRS resource set, the first PT-RS port is associated with one of the indicated DMRS port(s) mapped to the SRS resources indicated with the first PT-RS port according to the value of a first bit of a 4-bits *PT-RS-DMRS association* field based on a predetermined third table, the second PT-RS port is associated with one of the indicated DMRS port(s) mapped to the SRS resources indicated with the second PT-RS port according to the value of a second bit of the 4-bits *PT-RS-DMRS association* field based on the predetermined third table, the third PT-RS port is associated with one of the indicated DMRS port(s) mapped to the SRS resources indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the processor is further configured to transmit, via the transceiver, an SRS configuration of multiple SRS resource sets for non-codebook, wherein the number of SRS resource sets for non-codebook is equal to the supported maximum number of PT-RS port(s), all SRS resources within the same SRS resource set for non-codebook share a same PT-RS port, if the configuration configures one PT-RS port, the one PT-RS port is associated with one of the indicated DMRS ports according to the value of a 3-bits *PT-RS-DMRS association* field based on a predetermined first table, if the configuration configures a first PT-RS port and a second PT-RS port, the first PT-RS port is associated with one of the indicated DMRS port(s) mapped to the SRS resources within the SRS resource set indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources within the SRS resource set indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, the first PT-RS port is associated with one of the indicated DMRS port(s) mapped to the SRS resources within the SRS resource set indicated with the first PT-RS port according to the value of a first bit of a 4-bits *PT-RS-DMRS association* field based on a predetermined third table, the second PT-RS port is associated with one of the indicated DMRS port(s) mapped to the SRS resources within the SRS resource set indicated with the second PT-RS port according to the value of a second bit of the 4-bits *PT-RS-DMRS association* field based on the predetermined third table, the third PT-RS port is associated with one of the indicated DMRS port(s) mapped to the SRS resources within the SRS resource set indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources within the SRS resource set indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.In yet another embodiment, a method performed at a base unit comprises receiving a capability on supported maximum number of PT-RS port(s) from a UE equipped with 8 antenna ports, wherein, the supported maximum number of PT-RS port(s) is equal to or smaller than the number of coherent groups for the 8 antenna ports, where all antenna ports within a same coherent group are coherent and different antenna ports from different coherent groups are non-coherent; and transmitting, to the UE, a configuration to configure one or multiple PT-RS ports according to the supported maximum number of PT-RS port(s).

### BRIEF DESCRIPTION OF THE DRAWINGS

A more particular description of the embodiments briefly described above will be rendered by reference to specific embodiments that are illustrated in the appended drawings. Understanding that these drawings depict only some embodiments, and are not therefore to be considered to be limiting of scope, the embodiments will be described and explained with additional specificity and detail through the use of the accompanying drawings, in which:
Figure 1 illustrates several antenna layouts with different number of antenna groups;
Figure 2 illustrates an example of antenna layout 1-a and antenna layout 1-b;
Figure 3 illustrates an example of antenna layout 2-a and antenna layout 2-b;
Figure 4 illustrates an example of antenna layout 3-a and antenna layout 3-b;
Figure 5 is a schematic flow chart diagram illustrating an embodiment of a method;
Figure 6 is a schematic flow chart diagram illustrating an embodiment of another method; and
Figure 7 is a schematic block diagram illustrating apparatuses according to one embodiment.

### DETAILED DESCRIPTION

As will be appreciated by one skilled in the art that certain aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may generally all be referred to herein as a "circuit", "module" or "system". Furthermore, embodiments may take the form of a program product embodied in one or more computer readable storage devices storing machinereadable code, computer readable code, and/or program code, referred to hereafter as "code". The storage devices may be tangible, non-transitory, and/or non-transmission. The storage devices may not embody signals. In a certain embodiment, the storage devices only employ signals for accessing code.

Certain functional units described in this specification may be labeled as "modules", in order to more particularly emphasize their independent implementation. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but, may include disparate instructions stored in different locations which, when joined logically together, include the module and achieve the stated purpose for the module.

Indeed, a module of code may contain a single instruction, or many instructions, and may even be distributed over several different code segments, among different programs, and across several memory devices. Similarly, operational data may be identified and illustrated herein within modules and may be embodied in any suitable form and organized within any suitable type of data structure. This operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing code. The storage device may be, for example, but need not necessarily be, an electronic, magnetic, optical, electromagnetic, infrared, holographic, micromechanical, or semiconductor system, apparatus, or device, or any suitable combination of the foregoing.

A non-exhaustive list of more specific examples of the storage device would include the following: an electrical connection having one or more wires, a portable computer diskette, a hard disk, random access memory (RAM), read-only memory (ROM), erasable programmable read-only memory (EPROM or Flash Memory), portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

Code for carrying out operations for embodiments may include any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may be executed entirely on the user's computer, partly on the user's computer, as a stand-alone software package, partly on the user's computer and partly on a remote computer or entirely on the remote computer or server. In the very last scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment", "an embodiment", or similar language means that a particular feature, structure, or characteristic described in connection with the embodiment is included in at least one embodiment. Thus, appearances of the phrases "in one embodiment", "in an embodiment", and similar language throughout this specification may, but do not necessarily, all refer to the same embodiment, but mean "one or more but not all embodiments" unless expressly specified otherwise. The terms "including", "comprising", "having", and variations thereof mean "including but are not limited to", unless otherwise expressly specified. An enumerated listing of items does not imply that any or all of the items are mutually exclusive, otherwise unless expressly specified. The terms "a", "an", and "the" also refer to "one or more" unless otherwise expressly specified.

Furthermore, described features, structures, or characteristics of various embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid any obscuring of aspects of an embodiment.

Aspects of different embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general purpose computer, special purpose computer, or other programmable data processing apparatus to produce a machine, such that the instructions, which are executed via the processor of the computer or other programmable data processing apparatus, create means for implementing the functions specified in the schematic flowchart diagrams and/or schematic block diagrams for the block or blocks.

The code may also be stored in a storage device that can direct a computer, other programmable data processing apparatus, or other devices, to function in a particular manner, such that the instructions stored in the storage device produce an article of manufacture including instructions which implement the function specified in the schematic flowchart diagrams and/or schematic block diagrams block or blocks.

The code may also be loaded onto a computer, other programmable data processing apparatus, or other devices, to cause a series of operational steps to be performed on the computer, other programmable apparatus or other devices to produce a computer implemented process such that the code executed on the computer or other programmable apparatus provides processes for implementing the functions specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that in some alternative implementations, the functions noted in the block may occur out of the order noted in the Figures. For example, two blocks shown in succession may substantially be executed concurrently, or the blocks may sometimes be executed in the reverse order, depending upon the functionality involved. Other steps and methods may be conceived that are equivalent in function, logic, or effect to one or more blocks, or portions thereof, to the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each Figure may refer to elements of proceeding figures. Like numbers refer to like elements in all figures, including alternate embodiments of like elements.

The UE can be configured in two different modes for PUSCH multi-antenna precoding, referred as codebook (CB) based transmission and non-codebook (nCB) based transmission, respectively. When the UE is configured with codebook based PUSCH transmission, one SRS resource set used for codebook can be configured in a BWP of a cell for the UE. When the UE is configured with non-codebook based PUSCH transmission, one SRS resource set used for non-codebook can be configured in a BWP of a cell for the UE.

To enable codebook based PUSCH transmission, the UE shall be configured to transmit one or more SRS resources used for codebook for uplink channel measurement. Based on the measurements on the configured SRS resources transmitted by the UE, the gNB determines a suitable rank and the precoding matrix from a pre-defined codebook, which includes a set of precoding matrices with different ranks, and sends the information to the UE when scheduling a PUSCH transmission.

For non-codebook based PUSCH transmission, the UE is required to measure a CSI-RS to obtain the uplink channel information based on channel reciprocity. In this case, a CSI-RS resource, which is a DL reference signaling transmitted by the gNB for DL channel measurement, is associated with the SRS resource set used for non-codebook. The UE selects what it believes is a suitable uplink precoder and applies the selected precoder to a set of configured SRS resources with one SRS resource transmitted on each layer defined by the precoder. Based on the received SRS resources, the gNB decides to modify the UE-selected precoder for the scheduled PUSCH transmission.

When a UE is equipped with 8 antenna ports (e.g. PUSCH or SRS antenna ports), the base unit (e.g. gNB) may send to the UE a DCI (e.g. DCI with format 0_1 or DCI with format 0_2) scheduling a PUSCH transmission with up to 8 layers (i.e. PUSCH layers). The 8 antenna ports (e.g. PUSCH or SRS antenna ports) may be numbered as PUSCH or SRS antenna ports 1000, 1001, 1002, 1003, 1004, 1005, 1006, and 1007.

When the PUSCH layers are transmitted from the UE, a precoding matrix is used to perform UL precoding on modulated data in codebook based PUSCH transmission. The UE shall perform UL precoding according to Equation 1. Equation 1: $\left[\begin{matrix}{z}_{0}^{\left({P}_{0}\right)} \left(i\right) \\ ⋮ \\ {z}_{0}^{\left({P}_{ρ - 1}\right)} \left(i\right)\end{matrix}\right] = {W}_{0} \left[\begin{matrix}{y}_{0}^{\left(0\right)} \left(i\right) \\ ⋮ \\ {y}_{0}^{\left({ν}_{0}-1\right)} \left(i\right)\end{matrix}\right]$ where, the block of vector ${\left[{y}_{0}^{\left(0\right)}\left(i\right) ⋯ {y}_{0}^{\left({ν}_{0}-1\right)}\left(i\right)\right]}^{T}$ is the modulated data that will be transmitted; *W*₀ is the precoding matrix applied to the block of vector; and the block of vector ${\left[{z}_{0}^{\left({P}_{0}\right)}\left(i\right) ⋯ {z}_{0}^{\left({P}_{ρ - 1}\right)}\left(i\right)\right]}^{T}$ is the pre-coded data to be transmitted by the UE. *v*₀ indicates the number of PUSCH layers. *P*₀ corresponds to PUSCH antenna port 1000 and *P*_{*ρ-*1} corresponds to PUSCH antenna port 1000+ *ρ* - 1.

Coherent transmission is described as follows:
If a UE reports a capability of full-coherent and 8 antenna ports (i.e., PUSCH antenna port 1000, 1001, 1002, 1003, 1004, 1005, 1006 and 1007), all 8 PUSCH antenna ports can be used for coherent transmission of a PUSCH layer. For example, the precoding vector used for each layer can have 8 non-zero elements, e.g. $W = \frac{1}{2 \sqrt{2}} {\left[1, j, 1, j, 1, j, 1, j\right]}^{T}$ is a valid precoding vector for a PUSCH layer in full-coherent transmission with 8 antenna ports. If the phase difference between any two antenna ports among multiple antenna ports is fixed, the multiple antenna ports are coherent. If the phase difference between any two antenna ports among multiple antenna ports is not fixed, the multiple antenna ports are non-coherent.

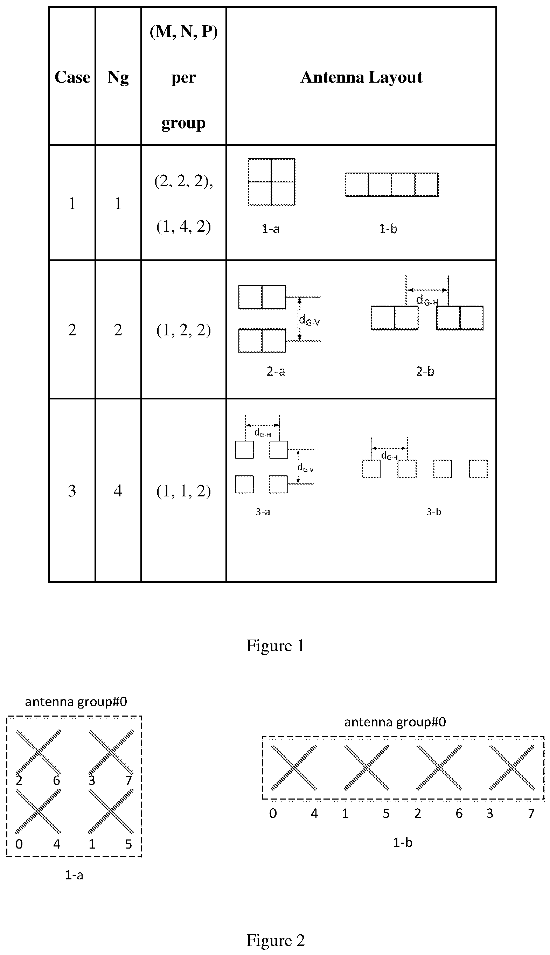

If a UE reports capability of partial-coherent or non-coherent with 8 antenna ports (i.e., PUSCH antenna port 1000, 1001, 1002, 1003, 1004, 1005, 1006 and 1007), only coherent antenna ports (where the coherent antenna ports are a part of the 8 antenna ports) can be used for transmission of one PUSCH layer. In particular, all 8 antenna ports are grouped as Ng antenna groups. All antenna ports within each antenna group are coherent, while antenna ports from different antenna groups may be coherent or non-coherent. Several antenna layouts with different number of antenna groups are illustrated in Figure 1.

In Figure 1, Ng denotes the number of antenna groups. M denotes the number of boxes in vertical direction in an antenna group. N denotes the number of boxes in horizontal direction in an antenna group. P denotes the number of antenna ports in a box. Each box illustrated in Figure 1 comprises 2 antennas (e.g. a pair of cross-polarized antennas), where each antenna corresponds to one antenna port.

Antenna layout 1-a and antenna layout 1-b correspond to full coherent antenna array, i.e. all 8 antenna ports within each of antenna layout 1-a and antenna layout 1-b belong to one antenna group (e.g. antenna group#0) and are coherent antenna ports.

Antenna layout 2-a and antenna layout 2-b may correspond to partial coherent antenna array with two antenna groups. For example, in each of antenna layout 2-a and antenna layout 2-b, each of antenna group#0 and antenna group#1 includes four coherent antenna ports.

Antenna layout 3-a and antenna layout 3-b may correspond to partial coherent antenna array with four antenna groups. For example, in each of antenna layout 3-a and antenna layout 3-b, each of antenna group#0, antenna group#1, antenna group#2, and antenna group#3 includes two coherent antenna ports.

This disclosure proposes a new concept "coherent group" (may also be referred to as "coherent antenna group"). Coherent group is defined as: antenna ports within a same coherent group are coherent while antenna ports within different coherent groups are non-coherent.

As described above, antenna ports within a same antenna group are coherent. So, depending on whether antenna ports within different antenna groups are coherent or non-coherent, the antenna ports within different antenna groups may belong to one coherent group (i.e. a single coherent group) or different coherent groups.

Figure 2 illustrates an example of antenna layout 1-a and antenna layout 1-b, each with antenna ports 0 to 7 (corresponding to PUSCH or SRS antenna ports 1000, 1001, 1002, 1003, 1004, 1005, 1006 and 1007, respectively)

In Figure 2, for each of antenna layout 1-a and antenna layout 1-b, antenna ports 0, 1, 2, 3, 4, 5, 6, 7 belong to one antenna group (e.g. antenna group#0).

All eight (8) antenna ports 0, 1, 2, 3, 4, 5, 6, 7 in one antenna group are coherent. So, all eight (8) antenna ports 0, 1, 2, 3, 4, 5, 6, 7 belong to one coherent group (e.g. coherent group#0). That is, each of antenna layout 1-a and antenna layout 1-b corresponds to full coherent antenna array.

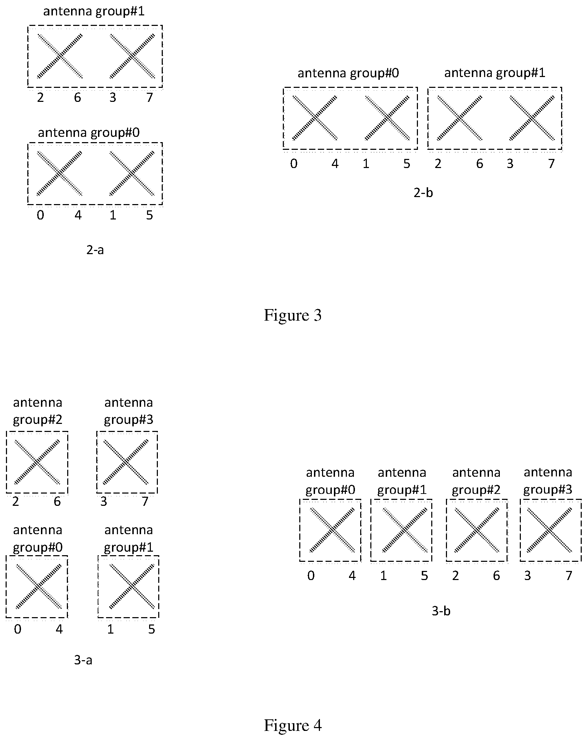

Figure 3 illustrates an example of antenna layout 2-a and antenna layout 2-b, each with antenna ports 0 to 7 (corresponding to PUSCH or SRS antenna ports 1000, 1001, 1002, 1003, 1004, 1005, 1006 and 1007, respectively).

In Figure 3, for each of antenna layout 2-a and antenna layout 2-b, antenna ports 0, 1, 4, 5 belong to antenna group#0; and antenna ports 2, 3, 6, 7 belong to antenna group#1. The antenna ports within the same antenna group are coherent. That is, antenna ports 0, 1, 4, 5 are coherent; and antenna ports 2, 3, 6, 7 are coherent. Depending on whether antenna ports within different antenna groups (e.g. antenna group#0 and antenna group#1) are coherent or non-coherent, the antenna ports within different antenna groups (e.g. antenna group#0 and antenna group#1) may belong to one coherent group (i.e. a single coherent group) or different coherent groups.

If antenna ports 0, 1, 4, 5 and antenna ports 2, 3, 6, 7 are non-coherent, antenna ports 0, 1, 4, 5 in antenna group#0 belong to a first coherent group (e.g. coherent group#0), and antenna ports 2, 3, 6, 7 in antenna group#1 belong to a second coherent group (e.g. coherent group#1). In this condition, antenna layout 2-a (or 2-b) may correspond to partial coherent antenna array with 2 coherent groups.

If antenna ports 0, 1, 4, 5 and antenna ports 2, 3, 6, 7 are coherent, both antenna ports 0, 1, 4, 5 in antenna group#0 and antenna ports 2, 3, 6, 7 in antenna group#1 belong to one coherent group (e.g. coherent group#0). In this condition, antenna layout 2-a (or 2-b) may correspond to full coherent antenna array.

Figure 4 illustrates an example of antenna layout 3-a and antenna layout 3-b, each with antenna ports 0 to 7 (corresponding to PUSCH or SRS antenna ports 1000, 1001, 1002, 1003, 1004, 1005, 1006 and 1007, respectively).

In Figure 4, for each of antenna layout 3-a and antenna layout 3-b, antenna ports 0, 4 belong to antenna group#0; antenna ports 1, 5 belong to antenna group#1; antenna ports 2, 6 belong to antenna group#2; and antenna ports 3, 7 belong to antenna group#3. That is, antenna ports 0, 4 are coherent; antenna ports 1, 5 are coherent; antenna ports 2, 6 are coherent; and antenna ports 3, 7 are coherent.

If antenna ports 0, 4 (antenna group#0), antenna ports 1, 5 (antenna group#1), antenna ports 2, 6 (antenna group#2) and antenna ports 3, 7 (antenna group#3) are non-coherent between any of two antenna groups, then, antenna ports 0, 4 in antenna group#0 belong to a first coherent group (e.g. coherent group#0); antenna ports 1, 5 in antenna group#1 belong to a second coherent group (e.g. coherent group#1); antenna ports 2, 6 in antenna group#2 belong to a third coherent group (e.g. coherent group#2); and antenna ports 3, 7 in antenna group#3 belong to a fourth coherent group (e.g. coherent group#3). In this condition, antenna layout 3-a (or 3-b) may correspond to partial coherent antenna array with 4 coherent groups.

Antenna ports within different (e.g. two) antenna groups may be coherent. For example, if antenna ports 0, 4 (antenna group#0) and antenna ports 1, 5 (antenna group#1) are coherent, antenna ports 2, 6 (antenna group#2) and antenna ports 3, 7 (antenna group#3) are coherent, and antenna ports 0, 1, 4, 5 and antenna ports 2, 3, 6, 7 are non-coherent, then, antenna ports 0, 4 in antenna group#0 and antenna ports 1, 5 in antenna group#1 belong to a first coherent group (e.g. coherent group#0); and antenna ports 2, 6 in antenna group#2 and antenna ports 3, 7 in antenna group#3 belong to a second coherent group (e.g. coherent group#1). In this condition, antenna layout 3-a (or 3-b) may correspond to partial coherent antenna array with 2 coherent groups.

If antenna ports 0, 4 (antenna group#0), antenna ports 1, 5 (antenna group#1), antenna ports 2, 6 (antenna group#2) and antenna ports 3, 7 (antenna group#3) are coherent, all of antenna ports 0, 4 in antenna group#0, antenna ports 1, 5 in antenna group#1, antenna ports 2, 6 in antenna group#2 and antenna ports 3, 7 in antenna group#3 belong to one coherent group (e.g. coherent group#0). In this condition, antenna layout 3-a (or 3-b) may correspond to full coherent antenna array.

As a whole, a coherent group may include antenna ports within one antenna group (i.e. antenna ports within different antenna groups are non-coherent), or may include antenna ports within different antenna groups (i.e. antenna ports within said different antenna groups are coherent).

Incidentally, if any two of the 8 antenna ports are non-coherent, the 8 antenna ports may correspond to 8 coherent groups. In this condition, non-coherent antenna array is formed.

As a whole, if the number of the coherent groups is 1, the one coherent group consists of 8 antenna ports. For example, the one coherent group contains antenna ports 1000, 1001, 1002, 1003, 1004, 1005, 1006 and 1007.

If the number of the coherent groups is 2, each of a first coherent group and a second coherent group consists of 4 antenna ports. For example, the first coherent group contains antenna ports 1000, 1001, 1004 and 1005, and the second coherent group contains antenna ports 1002, 1003, 1006 and 1007.

If the number of the coherent groups is 4, each of a first coherent group, a second coherent group, a third coherent group and a fourth coherent group consists of 2 antenna ports. For example, the first coherent group contains antenna ports 1000 and 1004; the second coherent group contains antenna ports 1001 and 1005; the third coherent group contains antenna ports 1002 and 1006; the fourth coherent group contains antenna ports 1003 and 1007.

If the number of the coherent groups is 8, each of a first coherent group, a second coherent group, a third coherent group, a fourth coherent group, a fifth coherent group, a sixth coherent group, a seventh coherent group, an eighth coherent group consists of 1 antenna port. For example, the first coherent group contains antenna port 1000, the second coherent group contains antenna port 1001, the third coherent group contains antenna port 1002, the fourth coherent group contains antenna port 1003, the fifth coherent group contains antenna port 1004, the sixth coherent group contains antenna port 1005, the seventh coherent group contains antenna port 1006, and the eighth coherent group contains antenna port 1007.

All antenna port(s) within a same coherent group can be used for transmission of one PUSCH layer; and different antenna ports from different coherent groups can be used for transmission of different PUSCH layers.

It is preferable that the supported number of PT-RS ports is equal to the number of coherent groups. It means that, in the condition of 8 antenna ports where the maximum number of coherent groups is 8, the supported maximum number of PT-RS ports will be 8.

Considering PT-RS overhead (which is higher when the number of configured PT-RS ports is larger), the supported maximum number of PT-RS ports can be smaller than the number of coherent groups.

In view of the above, the UE may report a capability on supported maximum number of PT-RS port(s), which is equal to or smaller than the number of coherent groups for the 8 antenna ports.

Upon receiving the capability on supported maximum number of PT-RS port(s) from a UE, the base unit (e.g. gNB) may determine the number of PT-RS port(s) configured to the UE according to the supported maximum number of PT-RS port(s) reported by the UE. For example, the gNB may transmit a configuration to configure the number of PT-RS port(s) to the UE. In particularly, the number of configured PT-RS port(s) may be equal to or smaller than the supported maximum number of PT-RS port(s) by the UE.

As described above, when the UE is equipped with 8 antenna ports, there can be 1 or 2 or 4 or 8 coherent groups.

If there is one coherent group, the supported maximum number of PT-RS port(s) may only be 1. If there are two coherent groups, the supported maximum number of PT-RS port(s) may be 1 or 2. If there are four coherent groups, the supported maximum number of PT-RS port(s) may be 1 or 2 or 4. If there are eight coherent groups, the supported maximum number of PT-RS port(s) may be 1 or 2 or 4 or 8.

When a UE reports a capability on supported maximum number of PT-RS port(s), the gNB determines the number of configured PT-RS ports to the UE according to the supported maximum number of PT-RS port(s) by the UE. For example, the gNB transmits a configuration to configure one or multiple PT-RS ports according to the reported number of the coherent groups. For example, the number of configured PT-RS ports to the UE may be equal to or smaller than the supported maximum number of PT-RS port(s) by the UE.

In particular, if the supported maximum number of PT-RS port(s) by the UE is 1, the number of configured PT-RS ports to the UE may only be 1; if the supported maximum number of PT-RS port(s) by the UE is 2, the number of configured PT-RS ports to the UE may be 1 or 2; if the supported maximum number of PT-RS port(s) by the UE is 4, the number of configured PT-RS ports to the UE may be 1 or 2 or 4; and if the supported maximum number of PT-RS port(s) by the UE is 8, the number of configured PT-RS ports to the UE may be 1 or 2 or 4 or 8, and preferably 1 or 2 or 4 considering PT-RS overhead.

This disclosure also proposes the mapping between the antenna ports (e.g. each of the 8 antenna ports) and the configured PT-RS port(s). In addition, this disclosure further proposes the association of the indicated DMRS ports with each of the configured PT-RS port(s) (e.g. each of the transmitted PT-RS port(s)).

A first embodiment to a fourth embodiment relate to codebook based PUSCH transmission with 8 antenna ports.

According to the first embodiment, the gNB configures one PT-RS port for UL for a UE in a BWP of a cell. The gNB may configure one PT-RS port if the supported maximum number of PT-RS port(s) is 1 or 2 or 4 or 8.

If the supported maximum number of PT-RS port(s) is 1 or 2 or 4 or 8, the number of the coherent groups may be 1 or 2 or 4 or 8.

According to the first embodiment, all 8 antenna ports share the configured one PT-RS port.

When one PT-RS port, e.g. PT-RS port 0, is configured, the gNB sends to the UE a DCI scheduling a PUSCH transmission with 1 to L PUSCH layers transmitted with the 8 antenna ports, where L is reported by the UE capability report and is up to 8. One DMRS port is indicated for each PUSCH layer. It means that the number of indicated DMRS ports is equal to the number of the scheduled PUSCH layers.

The one PT-RS port is associated with one of the indicated DMRS port(s).

When one PT-RS port is configured, a 3-bits *PT-RS-DMRS association* field is contained in the scheduling DCI (e.g. DCI with format 0_1 or 0_2). The value of the 3-bits *PT-RS-DMRS association* field indicates which DMRS port associated with the one PT-RS port according to Table 1.

**Table 1: PT-RS-DMRS association for one PUSCH PT-RS port being configured**

| **Value** | **DMRS port** |
|---|---|
| 000 | 1^{st} indicated DMRS port |
| 001 | 2^{nd} indicated DMRS port |
| 010 | 3^{rd} indicated DMRS port |
| 011 | 4^{th} indicated DMRS port |
| 100 | 5^{th} indicated DMRS port |
| 101 | 6^{th} indicated DMRS port |
| 110 | 7^{th} indicated DMRS port |
| 111 | 8^{th} indicated DMRS port |

Incidentally, if only one DMRS port is indicated (e.g. a PUSCH transmission with only one PUSCH layer is scheduled), the one PT-RS port is associated with the indicated one DMRS port. In this condition, the value of the 3-bits *PT-RS-DMRS association* field can only be 000. So, the UE is unnecessary to decode the 3-bits *PT-RS-DMRS association* field.

According to the second embodiment, the gNB configures two PT-RS ports for UL for a UE in a BWP of a cell. The two PT-RS ports can be referred to as a first PT-RS port (or PT-RS port 0) and a second PT-RS port (or PT-RS port 1). The gNB may configure two PT-RS ports if the supported maximum number of PT-RS port(s) is 2 or 4 or 8.

If the supported maximum number of PT-RS port(s) is 2 or 4 or 8, the number of the coherent groups may be 2 or 4 or 8.

If the number of the coherent groups is 2, then, the 4 antenna ports within the first coherent group share the first PT-RS port, and the 4 antenna ports within the second coherent group share the second PT-RS port.

If the number of the coherent groups is 4, then, the 4 antenna ports within the first coherent group and the second coherent group share the first PT-RS port, and the 4 antenna ports within the third coherent group and the fourth coherent group share the second PT-RS port.

If the number of the coherent groups is 8, then, the 4 antenna ports within the first coherent group, the second coherent group, the third coherent group and the fourth coherent group share the first PT-RS port, and the 4 antenna ports within the fifth coherent group, the sixth coherent group, the seventh coherent group and the eighth coherent group share the second PT-RS port.

When two PT-RS ports are configured, the gNB sends to the UE a DCI scheduling a PUSCH transmission with 2 to L PUSCH layers transmitted with the 8 antenna ports, where L is reported by the UE capability report and is up to 8, in which the 4 antenna ports sharing the first PT-RS port are used to transmit at least one PUSCH layer, and the 4 antenna ports sharing the second PT-RS port are used to transmit at least one PUSCH layer. The precoding matrix indicated by the TPMI field indicates which antenna port(s) are used to transmit each PUSCH layer.

One DMRS port is indicated for each PUSCH layer. So, the first PT-RS port is associated with one of the DMRS port(s) indicated for the PUSCH layer(s) transmitted by the 4 antenna ports sharing the first PT-RS port (i.e. one of the DRMS port(s) which shares the first PT-RS port); and the second PT-RS port is associated with one of the DMRS port(s) indicated for the PUSCH layer(s) transmitted by the 4 antenna ports sharing the second PT-RS port (i.e. one of the DRMS port(s) which shares the second PT-RS port).

When two PT-RS ports are configured, a 4-bits *PT-RS-DMRS association* field is contained in the scheduling DCI (e.g. DCI with format 0_1 or 0_2). The value of the first 2 bits (including the most significant bit and the bit next to the most significant bit) of the 4-bits *PT-RS-DMRS association* field indicates the DMRS port associated with first PT-RS port (PT-RS port 0) according to Table 2. The value of the last 2 bits (including the least significant bit and the bit next to the least significant bit) of the 4-bits *PT-RS-DMRS association* field indicates the DMRS port associated with second PT-RS port (PT-RS port 1) according to Table 2.

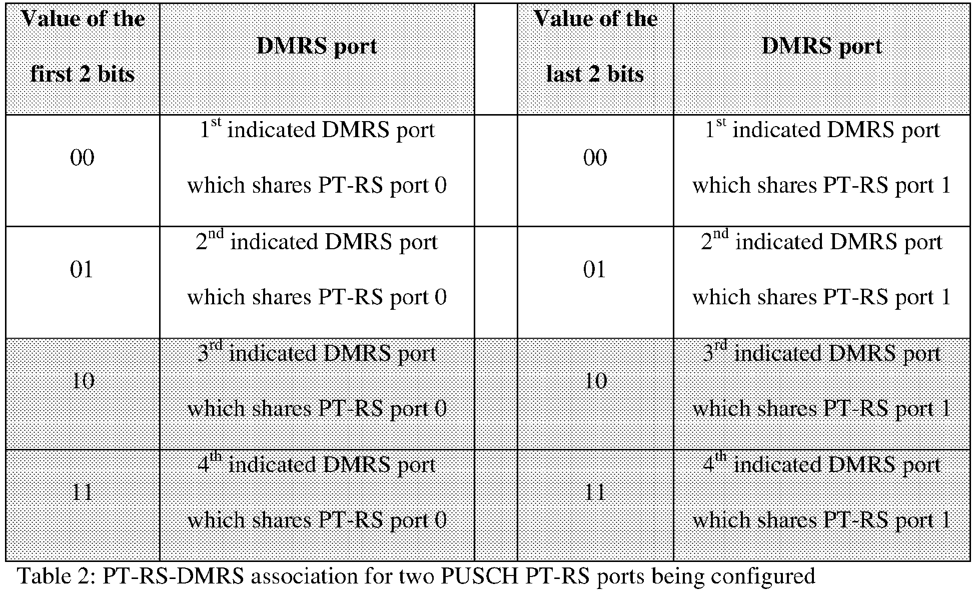

The actual number of UL (e.g. PUSCH) PT-RS ports to be transmitted is determined by the TMPI(s) and/or the number of PUSCH layers. For example, the TPMI field of the scheduling DCI indicates the precoding matrix used for the PUSCH transmission. The precoding matrix indicates which antenna port(s) are used to transmit each PUSCH layer. If all antenna ports sharing a PT-RS port are not used to transmit any PUSCH layer, the corresponding PT-RS port is not actually transmitted.

According to the third embodiment, the gNB configures four PT-RS ports for UL for a UE in a BWP of a cell. The four PT-RS ports can be referred to as a first PT-RS port (or PT-RS port 0), a second PT-RS port (or PT-RS port 1), a third PT-RS port (or PT-RS port 2), and a fourth PT-RS port (or PT-RS port 3). The gNB may configure four PT-RS ports if the supported maximum number of PT-RS port(s) is 4 or 8.

If the supported maximum number of PT-RS port(s) is 4 or 8, the number of the coherent groups may be 4 or 8.

If the number of the coherent groups is 4, then, the 2 antenna ports within the first coherent group share the first PT-RS port, the 2 antenna ports within the second coherent group share the second PT-RS port, the 2 antenna ports within the third coherent group share the third PT-RS port, and the 2 antenna ports within the fourth coherent group share the fourth PT-RS port.

If the number of the coherent groups is 8, then, the 2 antenna ports within the first coherent group and the second coherent group share the first PT-RS port, the 2 antenna ports within the third coherent group and the fourth coherent group share the second PT-RS port, the 2 antenna ports within the fifth coherent group and the sixth coherent group share the third PT-RS port, and the 2 antenna ports within the seventh coherent group and the eighth coherent group share the fourth PT-RS port.

When four PT-RS ports are configured, the gNB may send to the UE a DCI scheduling a PUSCH transmission with 4 to *L* PUSCH layers transmitted with the 8 antenna ports, where *L* is reported by the UE capability report and is up to 8, in which the 2 antenna ports sharing the first PT-RS port are used to transmit at least one PUSCH layer, the 2 antenna ports sharing the second PT-RS port are used to transmit at least one PUSCH layer, the 2 antenna ports sharing the third PT-RS port are used to transmit at least one PUSCH layer, and the 2 antenna ports sharing the fourth PT-RS port are used to transmit at least one PUSCH layer. The precoding matrix indicated by the TPMI field indicates which antenna port(s) are used to transmit each PUSCH layer.

One DMRS port is indicated for each PUSCH layer. So, the first PT-RS port is associated with one of the DMRS port(s) indicated for the PUSCH layer(s) transmitted by the 2 antenna ports sharing the first PT-RS port (i.e. one of the DRMS port(s) which shares the first PT-RS port); the second PT-RS port is associated with one of the DMRS port(s) indicated for the PUSCH layer(s) transmitted by the 2 antenna ports sharing the second PT-RS port (i.e. one of the DRMS port(s) which shares the second PT-RS port); the third PT-RS port is associated with one of the DMRS port(s) indicated for the PUSCH layer(s) transmitted by the 2 antenna ports sharing the third PT-RS port (i.e. one of the DRMS port(s) which shares the third PT-RS port); and the fourth PT-RS port is associated with one of the DMRS port(s) indicated for the PUSCH layer(s) transmitted by the 2 antenna ports sharing the fourth PT-RS port (i.e. one of the DRMS port(s) which shares the fourth PT-RS port).

When four PT-RS ports are configured, a 4-bits *PT-RS-DMRS association* field is contained in the scheduling DCI (e.g. DCI with format 0_1 or 0_2). The 4-bits *PT-RS-DMRS association* field has the four bits: b₀, b₁, b₂ and b₃ from the least significant bit (LSB) to the most significant bit (MSB).

The value of the bit b₃ (first bit) of the 4-bits *PT-RS-DMRS association* field indicates the DMRS port associated with PT-RS port 0 according to Table 3; the value of the bit b₂ (second bit) of the 4-bits *PT-RS-DMRS association* field indicates the DMRS port associated with PT-RS port 1 according to Table 3; the value of the bit b₁ (third bit) of the 4-bits *PT-RS-DMRS association* field indicates the DMRS port associated with PT-RS port 2 according to Table 3; and the value of the bit b₀ (fourth bit) of the 4-bits *PT-RS-DMRS association* field indicates the DMRS port associated with PT-RS port 3 according to Table 3.

**Table 3: PT-RS-DMRS association for four PUSCH PT-RS ports being configured**

| **Value of *b*₃** | **DMRS port** | | **Value of *b*₂** | **DMRS port** | | **Value of *b*₁** | **DMRS port** | | **Value of *b*₀** | **DMRS port** |
|---|---|---|---|---|---|---|---|---|---|---|
| 0 | 1^{st} indicated DMRS port which shares PT-RS port 0 | | 0 | 1^{st} indicated DMRS port which shares PT-RS port 1 | | 0 | 1^{st} indicated DMRS port which shares PT-RS port 2 | | 0 | 1^{st} indicated DMRS port which shares PT-RS port 3 |
| 1 | 2^{nd} indicated DMRS port which shares PT-RS port 0 | | 1 | 2^{nd} indicated DMRS port which shares PT-RS port 1 | | 1 | 2^{nd} indicated DMRS port which shares PT-RS port 2 | | 1 | 2^{nd} indicated DMRS port which shares PT-RS port 3 |

An example of the third embodiment is described.

A UE equipped with 8 antenna ports (antenna ports 1000, 1001, 1002, 1003, 1004, 1005, 1006 and 1007) has 4 coherent groups (a first coherent group, a second coherent group, a third coherent group and a fourth coherent group). The UE reports a capability on supported maximum number of PT-RS port(s) being 4. The UE is configured with 4 PT-RS ports (PT-RS port 0, PT-RS port 1, PT-RS port 2 and PT-RS port 3). Accordingly, antenna ports 1000 and 1004 belong to the first coherent group and share PT-RS port 0; antenna ports 1001 and 1005 belong to the second coherent group and share PT-RS port 1; antenna ports 1002 and 1006 belong to the third coherent group and share PT-RS port 2; and antenna ports 1003 and 1007 belong to the fourth coherent group and share PT-RS port 3.

If a precoding matrix $w = \frac{1}{2 \sqrt{2}} \left[\begin{matrix}0 & 0 \\ 1 & 0 \\ 0 & 1 \\ 0 & 0 \\ 0 & 0 \\ 1 & 0 \\ 0 & j \\ 0 & 0\end{matrix}\right]$ is indicated by TPMI. According to the precoding matrix, the PUSCH transmission has 2 PUSCH layers. It can be seen that a first PUSCH layer is transmitted by antenna ports 1001 and 1005 sharing PT-RS port 1, and a second PUSCH layer is transmitted by antenna ports 1002 and 1006 sharing PT-RS port 2. Two DMRS ports 2 and 3 are indicated by the scheduling DCI, where DMRS port 2 is a first (the only one) indicated DMRS port for the first PUSCH layer, and DMRS port 3 is a first (the only one) indicated DMRS port for the second PUSCH layer. Accordingly, PT-RS port 1 is associated with DMRS port 2; and PT-RS port 2 is associated with DMRS port 3.

According to the fourth embodiment, the gNB may configure eight PT-RS ports for UL for a UE in a BWP of a cell. The gNB may configure eight PT-RS ports if the supported maximum number of PT-RS port(s) is 8.

If the supported maximum number of PT-RS port(s) is 8, the number of the coherent groups is 8.

The 1 antenna port within the first coherent group uses the first PT-RS port, the 1 antenna port within the second coherent group uses the second PT-RS port, the 1 antenna port within the third coherent group uses the third PT-RS port, the 1 antenna port within the fourth coherent group uses the fourth PT-RS port, the 1 antenna port within the fifth coherent group uses the fifth PT-RS port, the 1 antenna port within the sixth coherent group uses the sixth PT-RS port, the 1 antenna port within the seventh coherent group uses the seventh PT-RS port, and the 1 antenna port within the eighth coherent group uses the eighth PT-RS port.

When eight PT-RS ports are configured, the gNB may send to the UE a DCI scheduling a PUSCH transmission with 8 PUSCH layers transmitted with the 8 antenna ports, in which each of the 8 antenna ports is used to transmit one PUSCH layer.

One DMRS port is indicated for each PUSCH layer. So, each PT-RS port is associated with the DMRS port indicated for the PUSCH layer transmitted by the 1 antenna port using the PT-RS port.

The drawback of the fourth embodiment is large PT-RS overhead.

A fifth embodiment and a sixth embodiment relate to non-codebook based PUSCH transmission with 8 antenna ports.

According to the fifth embodiment, the UE can be configured with one SRS resource set for non-codebook.

Up to 8 SRS resources each of which is configured with single SRS port can be configured within the one SRS resource set for non-codebook according to UE capability. Each SRS resource is configured with a PT-RS port index with possible values of 0, 1, 2 and 3 (i.e. configured with PT-RS port 0, 1, 2 or 3) when the UE reports the maximum number of supported PT-RS ports is 4. The maximum number of PT-RS port indices configured to the SRS resource(s) may be equal to the number of configured PT-RS ports. It means that up to 4 (e.g. 1 or 2 or 4) PT-RS ports are configured for all the SRS resources when UE reports the maximum number of supported PT-RS ports is 4. For example, if the SRS resources within the one SRS resource set for non-codebook are configured with either PT-RS port index 0 or 1 (i.e. either PT-RS port 0 or PT-RS port 1), it means that 2 PT-RS ports (i.e. PT-RS port 0 and PT-RS port 1) are configured. When one PT-RS port is configured, up to 8 SRS resources can be configured with a same PT-RS port index (e.g. index 0) (i.e. with a same PT-RS port, e.g. PT-RS port 0). When two PT-RS ports are configured, each of up to 4 SRS resources can be configured with a same PT-RS port index (e.g. index 0 or 1). When 4 PT-RS ports are configured, each of up to 2 SRS resources can be configured with a same PT-RS port index (e.g. 0 or 1 or 2 or 3).

The actual number of UL PT-RS port(s) to transmit is determined based on SRI(s) indicated in the scheduling DCI, which indicate one or multiple SRS resources within the one SRS resource set for non-codebook for the scheduled PUSCH transmission.

The UE shall perform one-to-one mapping from the indicated SRS resource(s) to the indicated DMRS port(s) in increasing order, where one DMRS port is indicated for each PUSCH layer.

All of SRS resources indicated with the same PT-RS port index (i.e. indicated with a same PT-RS port) share the same PT-RS port. The SRS resources with different PT-RS port indices use different PT-RS ports.

Each PT-RS port is associated with one of the indicated DMRS port(s) mapped to the indicated SRS resources configured with the same PT-RS port index of the PT-RS port (i.e. configured with the same PT-RS port).

If one PT-RS port is configured, the value of the 3-bits *PT-RS-DMRS association* field indicates which indicated DMRS port is associated with the one PT-RS port according to Table 1.

If two PT-RS ports (e.g. PT-RS port 0 and PT-RS port 1) are configured, the value of the first two bits and the value of the last two bits of the 4-bits *PT-RS-DMRS association* field indicates which indicated DMRS port is associated with PT-RS port 0 and which indicated DMRS port is associated with PT-RS port 1, respectively, according to Table 2.

If four PT-RS ports (e.g. PT-RS port 0, PT-RS port 1, PT-RS port 2, PT-RS port 3) are configured, the value of each of bits b₃, b₂, b₁, b₀ of the 4-bits *PT-RS-DMRS association* field indicates which indicated DMRS port is associated with PT-RS port 0, which indicated DMRS port is associated with PT-RS port 1, which indicated DMRS port is associated with PT-RS port 2, and which indicated DMRS port is associated with PT-RS port 3, respectively, according to Table 3.

According to the sixth embodiment, the UE can be configured with multiple (e.g. 2 or 4 or 8) SRS resource sets for non-codebook Up to 8 SRS resources each with single SRS port can be contained in all the multiple SRS resource sets according to UE capability. Each SRS resource set consists of the same number of SRS resources each of which is configured with single SRS port. All SRS resources within a same SRS resource set share a same PT-RS port. The SRS resources within different SRS resource sets use different PT-RS ports.

The number of configured SRS resource sets for non-codebook can be equal to supported maximum number of PT-RS port(s) reported by the UE.

For example, if the UE reports supported maximum number of PT-RS port(s) is 2, the UE may be configured with 2 SRS resource sets for non-codebook, where each SRS resource set consists of up to 4 SRS resources sharing a same PT-RS port.

For another example, if the UE reports supported maximum number of PT-RS port(s) is 4, the UE is configured with 4 SRS resource sets for non-codebook, where each SRS resource set consists of up to 2 SRS resources sharing a same PT-RS port.

The actual number of UL PT-RS port(s) to transmit is determined based on SRI(s) indicated in the scheduling DCI, which indicate one or multiple SRS resources among the configured SRS resources in the SRS resource sets for non-codebook.

Each SRS resource in each SRS resource set for non-codebook is mapped to one DMRS port.

Each PT-RS port shared by one SRS resource set is associated with one of the DMRS port(s) mapped to the SRS resources within one SRS resource set (i.e. one of the DMRS port(s) is associated with the PT-RS port).

If one PT-RS port is configured, the value of the 3-bits *PT-RS-DMRS association* field indicates which indicated DMRS port is associated with the one PT-RS port according to Table 1.

If two PT-RS ports (e.g. PT-RS port 0 and PT-RS port 1) are configured, the value of the first two bits and the value of the last two bits of the 4-bits *PT-RS-DMRS association* field indicates which indicated DMRS port is associated with PT-RS port 0 and which indicated DMRS port is associated with PT-RS port 1, respectively, according to Table 2.

If four PT-RS ports (e.g. PT-RS port 0, PT-RS port 1, PT-RS port 2, PT-RS port 3) are configured, the value of each of bits b₃, b₂, b₁, b₀ of the 4-bits *PT-RS-DMRS association* field indicates which indicated DMRS port is associated with PT-RS port 0, PT-RS port 1, PT-RS port 2, and PT-RS port 3, respectively, according to Table 3.

An example of the sixth embodiment is described.

A UE equipped with 8 antenna ports (antenna ports 1000, 1001, 1002, 1003, 1004, 1005, 1006 and 1007) has 4 coherent groups (a first coherent group, a second coherent group, a third coherent group and a fourth coherent group). The UE reports a capability on supported maximum number of PT-RS port(s) being 4.

The gNB configures 4 SRS resource sets for non-codebook as follows:
SRS resource set#1:={SRS resource 0, SRS resource 1}
SRS resource set#2:={ SRS resource 2, SRS resource 3}
SRS resource set#3:={SRS resource 3, SRS resource 5}
SRS resource set#4:={SRS resource 6, SRS resource 7}

If the UE is configured with 4 PT-RS ports (e.g. PT-RS port 0, PT-RS port 1, PT-RS port 2, PT-RS port 3), then, SRS resource 0 and SRS resource 1 share PT-RS port 0; SRS resource 2 and SRS resource 3 share PT-RS port 1; SRS resource 4 and SRS resource 5 share PT-RS port 2; and SRS resource 6 and SRS resource 7 share PT-RS port 3. If two SRS resources within one SRS resource set are indicated by the SRI field used for PUSCH transmission, then, one of the DMRS ports mapped to the SRS resources within each SRS resource set is determined to be associated with the PT-RS port shared by the SRS resource set according to Table 3.

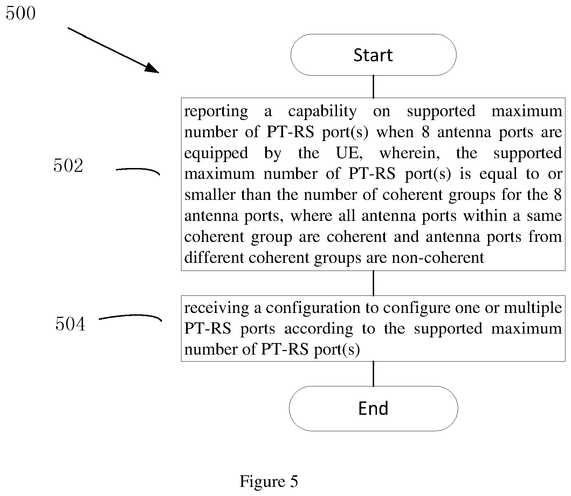

Figure 5 is a schematic flow chart diagram illustrating an embodiment of a method 500 according to the present application. In some embodiments, the method 500 is performed by an apparatus, such as a remote unit (e.g. UE). In certain embodiments, the method 500 may be performed by a processor executing program code, for example, a microcontroller, a microprocessor, a CPU, a GPU, an auxiliary processing unit, a FPGA, or the like.

The method 500 is a method performed at a UE, comprising: 502 reporting a capability on supported maximum number of PT-RS port(s) when 8 antenna ports are equipped by the UE, wherein, the supported maximum number of PT-RS port(s) is equal to or smaller than the number of coherent groups for the 8 antenna ports, where all antenna ports within a same coherent group are coherent and antenna ports from different coherent groups are non-coherent; and 504 receiving a configuration to configure one or multiple PT-RS ports according to the supported maximum number of PT-RS port(s).

In some embodiment, if the number of coherent groups for the 8 antenna ports is 1, the reported supported maximum number of the PT-RS port(s) is 1; if the number of coherent groups for the 8 antenna ports is 2, the reported supported maximum number of the PT-RS port(s) is 1 or 2; if the number of coherent groups for the 8 antenna ports is 4, the reported supported maximum number of the PT-RS port(s) is 1 or 2 or 4; and if the number of coherent groups for the 8 antenna ports is 8, the reported supported maximum number of the PT-RS port(s) is 1 or 2 or 4 or 8.

In some embodiment, if the reported supported maximum number of the PT-RS port(s) is 1, the configuration configures one PT-RS port, if the reported supported maximum number of the PT-RS port(s) is 2, the configuration configures one or two PT-RS ports, if the reported supported maximum number of the PT-RS port(s) is 4, the configuration configures one or two or four PT-RS ports, and if the reported number of the coherent groups is 8, the configuration configures one or two or four or eight PT-RS ports.

If the configuration configures one PT-RS port, the 8 antenna ports share the one PT-RS port, and the one PT-RS port is associated with one of the indicated DMRS port(s) according to the value of a 3-bits *PT-RS-DMRS association* field based on a predetermined first table.

If the configuration configures a first PT-RS port and a second PT-RS port, if there are two coherent groups, each of which consists of 4 antenna ports, the 4 antenna ports within a first coherent group share the first PT-RS port and the antenna ports within a second coherent group share the second PT-RS port, if there are four coherent groups, each of which consists of 2 antenna ports, the 4 antenna ports within a first coherent group and a second coherent group share the first PT-RS port and the 4 antenna ports within a third coherent group and a fourth coherent group share the second PT-RS port, if there are eight coherent groups, each of which consists of 1 antenna port, the 4 antenna ports within a first coherent group, a second coherent group, a third coherent group and a fourth coherent group share the first PT-RS port and the 4 antenna ports within a fifth coherent group, a sixth coherent group, a seventh coherent group and an eighth coherent group share the second PT-RS port, the first PT-RS port is associated with one of the indicated DMRS port(s) sharing the first PT-RS port according to the value of the first two bits of a 4-bits *PT-RS-DMRS association* field based on a predetermined second table, and the second PT-RS port is associated with one of the indicated DMRS port(s) sharing the second PT-RS port according to the value of the last two bits of the 4-bits *PT-RS-DMRS association* field based on the predetermined second table.

If the configuration configures a first PT-RS port, a second PT-RS port, a third PT-RS port and a fourth PT-RS port, if there are four coherent groups, each of which consists of 2 antenna ports, then, the 2 antenna ports within a first coherent group share the first PT-RS port, the 2 antenna ports within a second coherent group share the second PT-RS port, the 2 antenna ports within a third coherent group share the third PT-RS port, and the 2 antenna ports within a fourth coherent group share the fourth PT-RS port, if there are eight coherent groups, each of which consists of 1 antenna port, then, the 2 antenna ports within a first coherent group and a second coherent group share the first PT-RS port, the 2 antenna ports within a third coherent group and a fourth coherent group share the second PT-RS port, the 2 antenna ports within a fifth coherent group and a sixth coherent group share the third PT-RS port, and the 2 antenna ports within a seventh coherent group and an eighth coherent group share the fourth PT-RS port, the first PT-RS port is associated with one of the indicated DMRS port(s) sharing the first PT-RS port according to the value of a first bit of a 4-bits *PT-RS-DMRS association* field based on a predetermined third table, the second PT-RS port is associated with one of the indicated DMRS port(s) sharing the second PT-RS port according to the value of a second bit of the 4-bits *PT-RS-DMRS association* field based on the predetermined third table, the third PT-RS port is associated with one of the indicated DMRS port(s) sharing the third PT-RS port according to the value of a third bit of the 4-bits *PT-RS-DMRS association* field based on the predetermined third table, the fourth PT-RS port is associated with one of the indicated DMRS port(s) sharing the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the method further comprises receiving an SRS configuration of one SRS resource set for non-codebook, wherein the one SRS resource set consists of up to 8 SRS resources, each SRS resource is configured with a PT-RS port, if the configuration configures one PT-RS port, all SRS resources within the one SRS resource set share the one PT-RS port, and the one PT-RS port is associated with one of the indicated DMRS ports according to the value of a 3-bits *PT-RS-DMRS association* field based on a predetermined first table, if the configuration configures a first PT-RS port and a second PT-RS port, each of the first PT-RS port and the second PT-RS port is shared by up to 4 SRS resources within the one SRS resource set, the first PT-RS port is associated with one of the indicated DMRS port(s) mapped to the SRS resources indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, each of the first PT-RS port, the second PT-RS port, the third PT-RS port and the fourth PT-RS port is shared by up to 2 SRS resources within the one SRS resource set, the first PT-RS port is associated with one of the indicated DMRS port(s) mapped to the SRS resources indicated with the first PT-RS port according to the value of a first bit of a 4-bits *PT-RS-DMRS association* field based on a predetermined third table, the second PT-RS port is associated with one of the indicated DMRS port(s) mapped to the SRS resources indicated with the second PT-RS port according to the value of a second bit of the 4-bits *PT-RS-DMRS association* field based on the predetermined third table, the third PT-RS port is associated with one of the indicated DMRS port(s) mapped to the SRS resources indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the method further comprises receiving an SRS configuration of multiple SRS resource sets for non-codebook, wherein the number of SRS resource sets for non-codebook is equal to the supported maximum number of PT-RS port(s), all SRS resources within the same SRS resource set for non-codebook share a same PT-RS port, if the configuration configures one PT-RS port, the one PT-RS port is associated with one of the indicated DMRS ports according to the value of a 3-bits *PT-RS-DMRS association* field based on a predetermined first table, if the configuration configures a first PT-RS port and a second PT-RS port, the first PT-RS port is associated with one of the indicated DMRS port(s) mapped to the SRS resources within the SRS resource set indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources within the SRS resource set indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, the first PT-RS port is associated with one of the indicated DMRS port(s) mapped to the SRS resources within the SRS resource set indicated with the first PT-RS port according to the value of a first bit of a 4-bits *PT-RS-DMRS association* field based on a predetermined third table, the second PT-RS port is associated with one of the indicated DMRS port(s) mapped to the SRS resources within the SRS resource set indicated with the second PT-RS port according to the value of a second bit of the 4-bits *PT-RS-DMRS association* field based on the predetermined third table, the third PT-RS port is associated with one of the indicated DMRS port(s) mapped to the SRS resources within the SRS resource set indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources within the SRS resource set indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

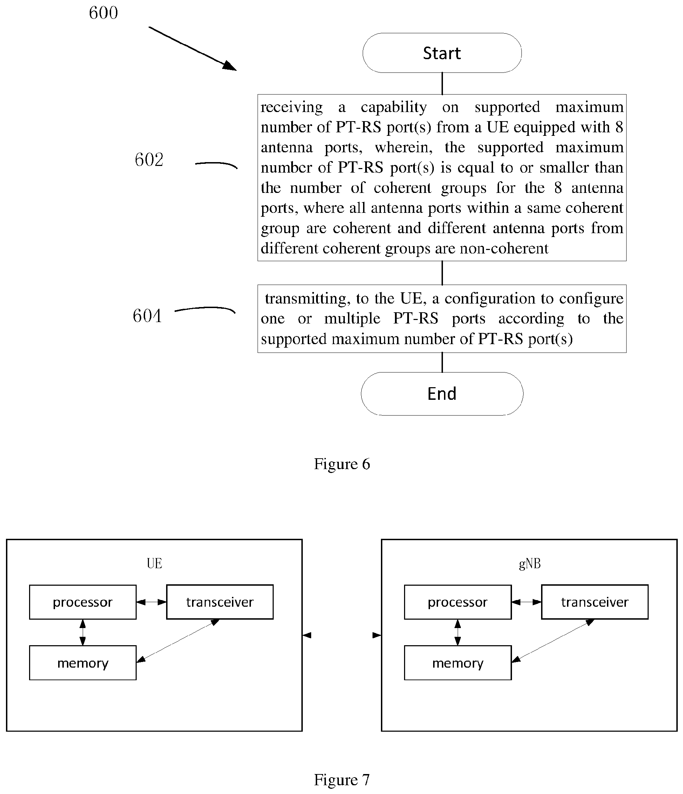

Figure 6 is a schematic flow chart diagram illustrating an embodiment of a method 600 according to the present application. In some embodiments, the method 600 is performed by an apparatus, such as a base unit. In certain embodiments, the method 600 may be performed by a processor executing program code, for example, a microcontroller, a microprocessor, a CPU, a GPU, an auxiliary processing unit, a FPGA, or the like.

The method 600 may comprise 602 receiving a capability on supported maximum number of PT-RS port(s) from a UE equipped with 8 antenna ports, wherein, the supported maximum number of PT-RS port(s) is equal to or smaller than the number of coherent groups for the 8 antenna ports, where all antenna ports within a same coherent group are coherent and different antenna ports from different coherent groups are non-coherent; and 604 transmitting, to the UE, a configuration to configure one or multiple PT-RS ports according to the supported maximum number of PT-RS port(s).

In some embodiment, if the supported maximum number of the PT-RS port(s) is 1, the number of coherent groups for the 8 antenna ports is 1 or 2 or 4 or 8; if the supported maximum number of the PT-RS port(s) is 2, the number of coherent groups for the 8 antenna ports is 2 or 4 or 8; if the supported maximum number of the PT-RS port(s) is 4, the number of coherent groups for the 8 antenna ports is 4 or 8; and if the supported maximum number of the PT-RS port(s) is 8, the number of coherent groups for the 8 antenna ports is 8.

In some embodiment, if the supported maximum number of the PT-RS port(s) is 1, the configuration configures one PT-RS port, if the supported maximum number of the PT-RS port(s) is 2, the configuration configures one or two PT-RS ports, if the supported maximum number of the PT-RS port(s) is 4, the configuration configures one or two or four PT-RS ports, and if the number of the coherent groups is 8, the configuration configures one or two or four or eight PT-RS ports.

If the configuration configures one PT-RS port, the 8 antenna ports share the one PT-RS port, and the one PT-RS port is associated with one of the indicated DMRS port(s) according to the value of a 3-bits *PT-RS-DMRS association* field based on a predetermined first table.

If the configuration configures a first PT-RS port and a second PT-RS port, if there are two coherent groups, each of which consists of 4 antenna ports, the 4 antenna ports within a first coherent group share the first PT-RS port and the antenna ports within a second coherent group share the second PT-RS port, if there are four coherent groups, each of which consists of 2 antenna ports, the 4 antenna ports within a first coherent group and a second coherent group share the first PT-RS port and the 4 antenna ports within a third coherent group and a fourth coherent group share the second PT-RS port, if there are eight coherent groups, each of which consists of 1 antenna port, the 4 antenna ports within a first coherent group, a second coherent group, a third coherent group and a fourth coherent group share the first PT-RS port and the 4 antenna ports within a fifth coherent group, a sixth coherent group, a seventh coherent group and an eighth coherent group share the second PT-RS port, the first PT-RS port is associated with one of the indicated DMRS port(s) sharing the first PT-RS port according to the value of the first two bits of a 4-bits *PT-RS-DMRS association* field based on a predetermined second table, and the second PT-RS port is associated with one of the indicated DMRS port(s) sharing the second PT-RS port according to the value of the last two bits of the 4-bits *PT-RS-DMRS association* field based on the predetermined second table.

If the configuration configures a first PT-RS port, a second PT-RS port, a third PT-RS port and a fourth PT-RS port, if there are four coherent groups, each of which consists of 2 antenna ports, then, the 2 antenna ports within a first coherent group share the first PT-RS port, the 2 antenna ports within a second coherent group share the second PT-RS port, the 2 antenna ports within a third coherent group share the third PT-RS port, and the 2 antenna ports within a fourth coherent group share the fourth PT-RS port, if there are eight coherent groups, each of which consists of 1 antenna port, then, the 2 antenna ports within a first coherent group and a second coherent group share the first PT-RS port, the 2 antenna ports within a third coherent group and a fourth coherent group share the second PT-RS port, the 2 antenna ports within a fifth coherent group and a sixth coherent group share the third PT-RS port, and the 2 antenna ports within a seventh coherent group and an eighth coherent group share the fourth PT-RS port, the first PT-RS port is associated with one of the indicated DMRS port(s) sharing the first PT-RS port according to the value of a first bit of a 4-bits *PT-RS-DMRS association* field based on a predetermined third table, the second PT-RS port is associated with one of the indicated DMRS port(s) sharing the second PT-RS port according to the value of a second bit of the 4-bits *PT-RS-DMRS association* field based on the predetermined third table, the third PT-RS port is associated with one of the indicated DMRS port(s) sharing the third PT-RS port according to the value of a third bit of the 4-bits *PT-RS-DMRS association* field based on the predetermined third table, the fourth PT-RS port is associated with one of the indicated DMRS port(s) sharing the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the method further comprises transmitting an SRS configuration of one SRS resource set for non-codebook, wherein the one SRS resource set consists of up to 8 SRS resources, each SRS resource is configured with a PT-RS port, if the configuration configures one PT-RS port, all SRS resources within the one SRS resource set share the one PT-RS port, and the one PT-RS port is associated with one of the indicated DMRS ports according to the value of a 3-bits *PT-RS-DMRS association* field based on a predetermined first table, if the configuration configures a first PT-RS port and a second PT-RS port, each of the first PT-RS port and the second PT-RS port is shared by up to 4 SRS resources within the one SRS resource set, the first PT-RS port is associated with one of the indicated DMRS port(s) mapped to the SRS resources indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, each of the first PT-RS port, the second PT-RS port, the third PT-RS port and the fourth PT-RS port is shared by up to 2 SRS resources within the one SRS resource set, the first PT-RS port is associated with one of the indicated DMRS port(s) mapped to the SRS resources indicated with the first PT-RS port according to the value of a first bit of a 4-bits *PT-RS-DMRS association* field based on a predetermined third table, the second PT-RS port is associated with one of the indicated DMRS port(s) mapped to the SRS resources indicated with the second PT-RS port according to the value of a second bit of the 4-bits *PT-RS-DMRS association* field based on the predetermined third table, the third PT-RS port is associated with one of the indicated DMRS port(s) mapped to the SRS resources indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the method further comprises transmitting an SRS configuration of multiple SRS resource sets for non-codebook, wherein the number of SRS resource sets for non-codebook is equal to the supported maximum number of PT-RS port(s), all SRS resources within the same SRS resource set for non-codebook share a same PT-RS port, if the configuration configures one PT-RS port, the one PT-RS port is associated with one of the indicated DMRS ports according to the value of a 3-bits *PT-RS-DMRS association* field based on a predetermined first table, if the configuration configures a first PT-RS port and a second PT-RS port, the first PT-RS port is associated with one of the indicated DMRS port(s) mapped to the SRS resources within the SRS resource set indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources within the SRS resource set indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, the first PT-RS port is associated with one of the indicated DMRS port(s) mapped to the SRS resources within the SRS resource set indicated with the first PT-RS port according to the value of a first bit of a 4-bits *PT-RS-DMRS association* field based on a predetermined third table, the second PT-RS port is associated with one of the indicated DMRS port(s) mapped to the SRS resources within the SRS resource set indicated with the second PT-RS port according to the value of a second bit of the 4-bits *PT-RS-DMRS association* field based on the predetermined third table, the third PT-RS port is associated with one of the indicated DMRS port(s) mapped to the SRS resources within the SRS resource set indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources within the SRS resource set indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

Figure 7 is a schematic block diagram illustrating apparatuses according to one embodiment.

Referring to Figure 7, the UE (i.e. the remote unit) includes a processor, a memory, and a transceiver. The processor implements a function, a process, and/or a method which are proposed in Figure 5.

The UE comprises a transceiver; and a processor coupled to the transceiver, wherein the processor is configured to report, via the transceiver, a capability on supported maximum number of PT-RS port(s) when 8 antenna ports are equipped by the UE, wherein, the supported maximum number of PT-RS port(s) is equal to or smaller than the number of coherent groups for the 8 antenna ports, where all antenna ports within a same coherent group are coherent and antenna ports from different coherent groups are non-coherent; and receive, via the transceiver, a configuration to configure one or multiple PT-RS ports according to the supported maximum number of PT-RS port(s).

In some embodiment, if the number of coherent groups for the 8 antenna ports is 1, the reported supported maximum number of the PT-RS port(s) is 1; if the number of coherent groups for the 8 antenna ports is 2, the reported supported maximum number of the PT-RS port(s) is 1 or 2; if the number of coherent groups for the 8 antenna ports is 4, the reported supported maximum number of the PT-RS port(s) is 1 or 2 or 4; and if the number of coherent groups for the 8 antenna ports is 8, the reported supported maximum number of the PT-RS port(s) is 1 or 2 or 4 or 8.

In some embodiment, if the reported supported maximum number of the PT-RS port(s) is 1, the configuration configures one PT-RS port, if the reported supported maximum number of the PT-RS port(s) is 2, the configuration configures one or two PT-RS ports, if the reported supported maximum number of the PT-RS port(s) is 4, the configuration configures one or two or four PT-RS ports, and if the reported number of the coherent groups is 8, the configuration configures one or two or four or eight PT-RS ports.

If the configuration configures one PT-RS port, the 8 antenna ports share the one PT-RS port, and the one PT-RS port is associated with one of the indicated DMRS port(s) according to the value of a 3-bits *PT-RS-DMRS association* field based on a predetermined first table.

If the configuration configures a first PT-RS port and a second PT-RS port, if there are two coherent groups, each of which consists of 4 antenna ports, the 4 antenna ports within a first coherent group share the first PT-RS port and the antenna ports within a second coherent group share the second PT-RS port, if there are four coherent groups, each of which consists of 2 antenna ports, the 4 antenna ports within a first coherent group and a second coherent group share the first PT-RS port and the 4 antenna ports within a third coherent group and a fourth coherent group share the second PT-RS port, if there are eight coherent groups, each of which consists of 1 antenna port, the 4 antenna ports within a first coherent group, a second coherent group, a third coherent group and a fourth coherent group share the first PT-RS port and the 4 antenna ports within a fifth coherent group, a sixth coherent group, a seventh coherent group and an eighth coherent group share the second PT-RS port, the first PT-RS port is associated with one of the indicated DMRS port(s) sharing the first PT-RS port according to the value of the first two bits of a 4-bits *PT-RS-DMRS association* field based on a predetermined second table, and the second PT-RS port is associated with one of the indicated DMRS port(s) sharing the second PT-RS port according to the value of the last two bits of the 4-bits *PT-RS-DMRS association* field based on the predetermined second table.

If the configuration configures a first PT-RS port, a second PT-RS port, a third PT-RS port and a fourth PT-RS port, if there are four coherent groups, each of which consists of 2 antenna ports, then, the 2 antenna ports within a first coherent group share the first PT-RS port, the 2 antenna ports within a second coherent group share the second PT-RS port, the 2 antenna ports within a third coherent group share the third PT-RS port, and the 2 antenna ports within a fourth coherent group share the fourth PT-RS port, if there are eight coherent groups, each of which consists of 1 antenna port, then, the 2 antenna ports within a first coherent group and a second coherent group share the first PT-RS port, the 2 antenna ports within a third coherent group and a fourth coherent group share the second PT-RS port, the 2 antenna ports within a fifth coherent group and a sixth coherent group share the third PT-RS port, and the 2 antenna ports within a seventh coherent group and an eighth coherent group share the fourth PT-RS port, the first PT-RS port is associated with one of the indicated DMRS port(s) sharing the first PT-RS port according to the value of a first bit of a 4-bits *PT-RS-DMRS association* field based on a predetermined third table, the second PT-RS port is associated with one of the indicated DMRS port(s) sharing the second PT-RS port according to the value of a second bit of the 4-bits *PT-RS-DMRS association* field based on the predetermined third table, the third PT-RS port is associated with one of the indicated DMRS port(s) sharing the third PT-RS port according to the value of a third bit of the 4-bits *PT-RS-DMRS association* field based on the predetermined third table, the fourth PT-RS port is associated with one of the indicated DMRS port(s) sharing the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the processor is further configured to receive, via the transceiver, an SRS configuration of one SRS resource set for non-codebook, wherein the one SRS resource set consists of up to 8 SRS resources, each SRS resource is configured with a PT-RS port, if the configuration configures one PT-RS port, all SRS resources within the one SRS resource set share the one PT-RS port, and the one PT-RS port is associated with one of the indicated DMRS ports according to the value of a 3-bits *PT-RS-DMRS association* field based on a predetermined first table, if the configuration configures a first PT-RS port and a second PT-RS port, each of the first PT-RS port and the second PT-RS port is shared by up to 4 SRS resources within the one SRS resource set, the first PT-RS port is associated with one of the indicated DMRS port(s) mapped to the SRS resources indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, each of the first PT-RS port, the second PT-RS port, the third PT-RS port and the fourth PT-RS port is shared by up to 2 SRS resources within the one SRS resource set, the first PT-RS port is associated with one of the indicated DMRS port(s) mapped to the SRS resources indicated with the first PT-RS port according to the value of a first bit of a 4-bits *PT-RS-DMRS association* field based on a predetermined third table, the second PT-RS port is associated with one of the indicated DMRS port(s) mapped to the SRS resources indicated with the second PT-RS port according to the value of a second bit of the 4-bits *PT-RS-DMRS association* field based on the predetermined third table, the third PT-RS port is associated with one of the indicated DMRS port(s) mapped to the SRS resources indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the processor is further configured to receive, via the transceiver, an SRS configuration of multiple SRS resource sets for non-codebook, wherein the number of SRS resource sets for non-codebook is equal to the supported maximum number of PT-RS port(s), all SRS resources within the same SRS resource set for non-codebook share a same PT-RS port, if the configuration configures one PT-RS port, the one PT-RS port is associated with one of the indicated DMRS ports according to the value of a 3-bits *PT-RS-DMRS association* field based on a predetermined first table, if the configuration configures a first PT-RS port and a second PT-RS port, the first PT-RS port is associated with one of the indicated DMRS port(s) mapped to the SRS resources within the SRS resource set indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources within the SRS resource set indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, the first PT-RS port is associated with one of the indicated DMRS port(s) mapped to the SRS resources within the SRS resource set indicated with the first PT-RS port according to the value of a first bit of a 4-bits *PT-RS-DMRS association* field based on a predetermined third table, the second PT-RS port is associated with one of the indicated DMRS port(s) mapped to the SRS resources within the SRS resource set indicated with the second PT-RS port according to the value of a second bit of the 4-bits *PT-RS-DMRS association* field based on the predetermined third table, the third PT-RS port is associated with one of the indicated DMRS port(s) mapped to the SRS resources within the SRS resource set indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources within the SRS resource set indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

The gNB (i.e. the base unit) includes a processor, a memory, and a transceiver. The processor implements a function, a process, and/or a method which are proposed in Figure 6.

The base unit comprises a transceiver; and a processor coupled to the transceiver, wherein the processor is configured to receive, via the transceiver, a capability on supported maximum number of PT-RS port(s) from a UE equipped with 8 antenna ports, wherein, the supported maximum number of PT-RS port(s) is equal to or smaller than the number of coherent groups for the 8 antenna ports, where all antenna ports within a same coherent group are coherent and different antenna ports from different coherent groups are non-coherent; and transmit, via the transceiver, to the UE, a configuration to configure one or multiple PT-RS ports according to the supported maximum number of PT-RS port(s).

In some embodiment, if the supported maximum number of the PT-RS port(s) is 1, the number of coherent groups for the 8 antenna ports is 1 or 2 or 4 or 8; if the supported maximum number of the PT-RS port(s) is 2, the number of coherent groups for the 8 antenna ports is 2 or 4 or 8; if the supported maximum number of the PT-RS port(s) is 4, the number of coherent groups for the 8 antenna ports is 4 or 8; and if the supported maximum number of the PT-RS port(s) is 8, the number of coherent groups for the 8 antenna ports is 8.

In some embodiment, if the supported maximum number of the PT-RS port(s) is 1, the configuration configures one PT-RS port, if the supported maximum number of the PT-RS port(s) is 2, the configuration configures one or two PT-RS ports, if the supported maximum number of the PT-RS port(s) is 4, the configuration configures one or two or four PT-RS ports, and if the number of the coherent groups is 8, the configuration configures one or two or four or eight PT-RS ports.

If the configuration configures one PT-RS port, the 8 antenna ports share the one PT-RS port, and the one PT-RS port is associated with one of the indicated DMRS port(s) according to the value of a 3-bits *PT-RS-DMRS association* field based on a predetermined first table.

If the configuration configures a first PT-RS port and a second PT-RS port, if there are two coherent groups, each of which consists of 4 antenna ports, the 4 antenna ports within a first coherent group share the first PT-RS port and the antenna ports within a second coherent group share the second PT-RS port, if there are four coherent groups, each of which consists of 2 antenna ports, the 4 antenna ports within a first coherent group and a second coherent group share the first PT-RS port and the 4 antenna ports within a third coherent group and a fourth coherent group share the second PT-RS port, if there are eight coherent groups, each of which consists of 1 antenna port, the 4 antenna ports within a first coherent group, a second coherent group, a third coherent group and a fourth coherent group share the first PT-RS port and the 4 antenna ports within a fifth coherent group, a sixth coherent group, a seventh coherent group and an eighth coherent group share the second PT-RS port, the first PT-RS port is associated with one of the indicated DMRS port(s) sharing the first PT-RS port according to the value of the first two bits of a 4-bits *PT-RS-DMRS association* field based on a predetermined second table, and the second PT-RS port is associated with one of the indicated DMRS port(s) sharing the second PT-RS port according to the value of the last two bits of the 4-bits *PT-RS-DMRS association* field based on the predetermined second table.

If the configuration configures a first PT-RS port, a second PT-RS port, a third PT-RS port and a fourth PT-RS port, if there are four coherent groups, each of which consists of 2 antenna ports, then, the 2 antenna ports within a first coherent group share the first PT-RS port, the 2 antenna ports within a second coherent group share the second PT-RS port, the 2 antenna ports within a third coherent group share the third PT-RS port, and the 2 antenna ports within a fourth coherent group share the fourth PT-RS port, if there are eight coherent groups, each of which consists of 1 antenna port, then, the 2 antenna ports within a first coherent group and a second coherent group share the first PT-RS port, the 2 antenna ports within a third coherent group and a fourth coherent group share the second PT-RS port, the 2 antenna ports within a fifth coherent group and a sixth coherent group share the third PT-RS port, and the 2 antenna ports within a seventh coherent group and an eighth coherent group share the fourth PT-RS port, the first PT-RS port is associated with one of the indicated DMRS port(s) sharing the first PT-RS port according to the value of a first bit of a 4-bits *PT-RS-DMRS association* field based on a predetermined third table, the second PT-RS port is associated with one of the indicated DMRS port(s) sharing the second PT-RS port according to the value of a second bit of the 4-bits *PT-RS-DMRS association* field based on the predetermined third table, the third PT-RS port is associated with one of the indicated DMRS port(s) sharing the third PT-RS port according to the value of a third bit of the 4-bits *PT-RS-DMRS association* field based on the predetermined third table, the fourth PT-RS port is associated with one of the indicated DMRS port(s) sharing the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the processor is further configured to transmit an SRS configuration of one SRS resource set for non-codebook, wherein the one SRS resource set consists of up to 8 SRS resources, each SRS resource is configured with a PT-RS port, if the configuration configures one PT-RS port, all SRS resources within the one SRS resource set share the one PT-RS port, and the one PT-RS port is associated with one of the indicated DMRS ports according to the value of a 3-bits *PT-RS-DMRS association* field based on a predetermined first table, if the configuration configures a first PT-RS port and a second PT-RS port, each of the first PT-RS port and the second PT-RS port is shared by up to 4 SRS resources within the one SRS resource set, the first PT-RS port is associated with one of the indicated DMRS port(s) mapped to the SRS resources indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, each of the first PT-RS port, the second PT-RS port, the third PT-RS port and the fourth PT-RS port is shared by up to 2 SRS resources within the one SRS resource set, the first PT-RS port is associated with one of the indicated DMRS port(s) mapped to the SRS resources indicated with the first PT-RS port according to the value of a first bit of a 4-bits *PT-RS-DMRS association* field based on a predetermined third table, the second PT-RS port is associated with one of the indicated DMRS port(s) mapped to the SRS resources indicated with the second PT-RS port according to the value of a second bit of the 4-bits *PT-RS-DMRS association* field based on the predetermined third table, the third PT-RS port is associated with one of the indicated DMRS port(s) mapped to the SRS resources indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

In some embodiment, the processor is further configured to transmit, via the transceiver, an SRS configuration of multiple SRS resource sets for non-codebook, wherein the number of SRS resource sets for non-codebook is equal to the supported maximum number of PT-RS port(s), all SRS resources within the same SRS resource set for non-codebook share a same PT-RS port, if the configuration configures one PT-RS port, the one PT-RS port is associated with one of the indicated DMRS ports according to the value of a 3-bits *PT-RS-DMRS association* field based on a predetermined first table, if the configuration configures a first PT-RS port and a second PT-RS port, the first PT-RS port is associated with one of the indicated DMRS port(s) mapped to the SRS resources within the SRS resource set indicated with the first PT-RS port according to the value of the first two bits of a 4-bits *PT-RS-DMRS association* field based on a predetermined second table, and the second PT-RS port is associated with one of the indicated DMRS port(s) mapped to the SRS resources within the SRS resource set indicated with the second PT-RS port according to the value of the last two bits of the 4-bits *PT-RS-DMRS association* field based on the predetermined second table, if the configuration configures a first PT-RS port, a second PT-RS port, a third PT-RS port and a fourth PT-RS port, the first PT-RS port is associated with one of the indicated DMRS port(s) mapped to the SRS resources within the SRS resource set indicated with the first PT-RS port according to the value of a first bit of a 4-bits *PT-RS-DMRS association* field based on a predetermined third table, the second PT-RS port is associated with one of the indicated DMRS port(s) mapped to the SRS resources within the SRS resource set indicated with the second PT-RS port according to the value of a second bit of the 4-bits *PT-RS-DMRS association* field based on the predetermined third table, the third PT-RS port is associated with one of the indicated DMRS port(s) mapped to the SRS resources within the SRS resource set indicated with the third PT-RS port according to the value of a third bit of the 4-bits *PT-RS-DMRS association* field based on the predetermined third table, the fourth PT-RS port is associated with one of the indicated DMRS port(s) mapped to the SRS resources within the SRS resource set indicated with the fourth PT-RS port according to the value of a fourth bit of the 4-bits *PT-RS-DMRS association* field based on the predetermined third table, where, the first bit, the second bit, the third bit and the fourth bit are from the most significant bit to the least significant bit of the 4-bits.

Layers of a radio interface protocol may be implemented by the processors. The memories are connected with the processors to store various pieces of information for driving the processors. The transceivers are connected with the processors to transmit and/or receive a radio signal. Needless to say, the transceiver may be implemented as a transmitter to transmit the radio signal and a receiver to receive the radio signal.

The memories may be positioned inside or outside the processors and connected with the processors by various well-known means.

In the embodiments described above, the components and the features of the embodiments are combined in a predetermined form. Each component or feature should be considered as an option unless otherwise expressly stated. Each component or feature may be implemented not to be associated with other components or features. Further, the embodiment may be configured by associating some components and/or features. The order of the operations described in the embodiments may be changed. Some components or features of any embodiment may be included in another embodiment or replaced with the component and the feature corresponding to another embodiment.

The embodiments may be implemented by hardware, firmware, software, or combinations thereof. In the case of implementation by hardware, according to hardware implementation, the exemplary embodiment described herein may be implemented by using one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and the like.

Embodiments may be practiced in other specific forms. The described embodiments are to be considered in all respects to be only illustrative and not restrictive. The scope of the invention is, therefore, indicated in the appended claims rather than by the foregoing description.

## Claims

1. A user equipment, UE, for wireless communication, comprising:
at least one memory; and
at least one processor coupled with the at least one memory and configured to cause the UE to:
receive a configuration to configure two phase tracking reference signal, PT-RS, ports for 8 antenna ports (0-7) uplink, UL, transmission (504), wherein:
if there are two coherent groups, each of which consists of 4 antenna ports, the 4 antenna ports within a first coherent group share a first PT-RS port and the antenna ports within a second coherent group share a second PT-RS port,
if there are four coherent groups, each of which consists of 2 antenna ports, the 4 antenna ports within a first coherent group and a second coherent group share the first PT-RS port and the 4 antenna ports within a third coherent group and a fourth coherent group share the second PT-RS port,
wherein antenna ports within a same coherent group are coherent while antenna ports within different coherent groups are non-coherent,
the first PT-RS port is associated with one of an indicated DMRS port(s) sharing the first PT-RS port according to a value of the first two bits of a 4-bits PT-RS-DMRS association field based on a predetermined second table, and
the second PT-RS port is associated with one of the indicated DMRS port(s) sharing the second PT-RS port according to a value of the last two bits of the 4-bits PT-RS-DMRS association field based on the predetermined second table.

2. The UE of claim 1, wherein:
if a number of coherent groups for the 8 antenna ports is 2, a reported supported maximum number of the PT-RS port(s) is 2;
if the number of coherent groups for the 8 antenna ports is 4, the reported supported maximum number of the PT-RS port(s) is 2 or 4; and
if the number of coherent groups for the 8 antenna ports is 8, the reported supported maximum number of the PT-RS port(s) is 2 or 4 or 8.

3. The UE of claim 1, wherein:
a reported supported maximum number is 2 or 4 or 8.

4. The UE of claim 1, wherein:
the at least one processor is further configured to cause the UE to receive an SRS configuration of one sounding reference signal,_SRS, resource set for non-codebook, wherein the one SRS resource set consists of up to 8 SRS resources, each SRS resource is configured with a PT-RS port;
wherein each of the first PT-RS port and the second PT-RS port is shared by up to 4 SRS resources within the one SRS resource set;
the first PT-RS port is associated with one of the indicated DMRS port(s) mapped to the SRS resources indicated with the first PT-RS port according to a value of the first two bits of a 4-bits PT-RS-DMRS association field based on a predetermined second table; and
the second PT-RS port is associated with one of the indicated DMRS port(s) mapped to the SRS resources indicated with the second PT-RS port according to a value of the last two bits of the 4-bits PT-RS-DMRS association field based on the predetermined second table.

5. The UE of claim 1, wherein:
the at least one processor is further configured to cause the UE to receive an SRS configuration of multiple SRS resource sets for non-codebook, wherein a number of SRS resource sets for non-codebook is equal to a supported maximum number of PT-RS port(s);
all SRS resources within the same SRS resource set for non-codebook share a same PT-RS port;
wherein the first PT-RS port is associated with one of the indicated DMRS port(s) mapped to the SRS resources within the SRS resource set indicated with the first PT-RS port according to a value of the first two bits of a 4-bits PT-RS-DMRS association field based on a predetermined second table; and
the second PT-RS port is associated with one of the indicated DMRS port(s) mapped to the SRS resources within the SRS resource set indicated with the second PT-RS port according to a value of the last two bits of the 4-bits PT-RS-DMRS association field based on the predetermined second table.

6. A method (500) for wireless communication performed at a user equipment, UE, comprising:
receiving a configuration to configure two phase tracking reference signal, PT-RS, ports for 8 antenna ports (0-7) uplink, UL, transmission (504), wherein:
if there are two coherent groups, each of which consists of 4 antenna ports, the 4 antenna ports within a first coherent group share a first PT-RS port and the antenna ports within a second coherent group share a second PT-RS port,
if there are four coherent groups, each of which consists of 2 antenna ports, the 4 antenna ports within a first coherent group and a second coherent group share the first PT-RS port and the 4 antenna ports within a third coherent group and a fourth coherent group share the second PT-RS port,
wherein antenna ports within a same coherent group are coherent while antenna ports within different coherent groups are non-coherent,
the first PT-RS port is associated with one of an indicated DMRS port(s) sharing the first PT-RS port according to a value of the first two bits of a 4-bits PT-RS-DMRS association field based on a predetermined second table, and
the second PT-RS port is associated with one of the indicated DMRS port(s) sharing the second PT-RS port according to a value of the last two bits of the 4-bits PT-RS-DMRS association field based on the predetermined second table.

7. A base unit for wireless communication, comprising:
at least one memory; and
at least one processor coupled with the at least one memory and configured to cause the base station to:
transmit to the UE, a configuration to configure two phase tracking reference signal, PT-RS, ports for 8 antenna ports (0-7) uplink, UL, transmission (604), wherein:
if there are two coherent groups, each of which consists of 4 antenna ports, the 4 antenna ports within a first coherent group share a first PT-RS port and the antenna ports within a second coherent group share a second PT-RS port,
if there are four coherent groups, each of which consists of 2 antenna ports, the 4 antenna ports within a first coherent group and a second coherent group share the first PT-RS port and the 4 antenna ports within a third coherent group and a fourth coherent group share the second PT-RS port,
wherein antenna ports within a same coherent group are coherent while antenna ports within different coherent groups are non-coherent,
the first PT-RS port is associated with one of an indicated DMRS port(s) sharing the first PT-RS port according to a value of the first two bits of a 4-bits PT-RS-DMRS association field based on a predetermined second table, and
the second PT-RS port is associated with one of the indicated DMRS port(s) sharing the second PT-RS port according to a value of the last two bits of the 4-bits PT-RS-DMRS association field based on the predetermined second table.

8. The base unit of claim 7, wherein,
if a supported maximum number of the PT-RS port(s) is 2, the number of coherent groups for the 8 antenna ports is 2 or 4 or 8;
if the supported maximum number of the PT-RS port(s) is 4, the number of coherent groups for the 8 antenna ports is 4 or 8; and
if the supported maximum number of the PT-RS port(s) is 8, the number of coherent groups for the 8 antenna ports is 8.

9. The base unit of claim 7, wherein:
a supported maximum number of the PT-RS ports(s) is 2 or 4 or 8.

10. The base unit of claim 7, wherein:
if there are eight coherent groups, each of which consists of 1 antenna port, the 4 antenna ports within a first coherent group, a second coherent group, a third coherent group and a fourth coherent group share the first PT-RS port and the 4 antenna ports within a fifth coherent group, a sixth coherent group, a seventh coherent group and an eighth coherent group share the second PT-RS port.

11. The base unit of claim 7, wherein:
the at least one processor is further configured to transmit a sounding reference signal, SRS, configuration of one SRS resource set for non-codebook, wherein the one SRS resource set consists of up to 8 SRS resources, each SRS resource is configured with a PT-RS port;
wherein each of the first PT-RS port and the second PT-RS port is shared by up to 4 SRS resources within the one SRS resource set;
the first PT-RS port is associated with one of the indicated DMRS port(s) mapped to the SRS resources indicated with the first PT-RS port according to a value of the first two bits of a 4-bits PT-RS-DMRS association field based on a predetermined second table; and
the second PT-RS port is associated with one of the indicated DMRS port(s) mapped to the SRS resources indicated with the second PT-RS port according to a value of the last two bits of the 4-bits PT-RS-DMRS association field based on the predetermined second table.

12. The base unit of claim 7, wherein,
the at least one processor is further configured to cause the base unit to transmit an SRS configuration of multiple SRS resource sets for non-codebook, wherein the number of SRS resource sets for non-codebook is equal to the supported maximum number of PT-RS port(s);
all SRS resources within the same SRS resource set for non-codebook share a same PT-RS port;
wherein the first PT-RS port is associated with one of the indicated DMRS port(s) mapped to the SRS resources within the SRS resource set indicated with the first PT-RS port according to a value of the first two bits of a 4-bits PT-RS-DMRS association field based on a predetermined second table; and
the second PT-RS port is associated with one of the indicated DMRS port(s) mapped to the SRS resources within the SRS resource set indicated with the second PT-RS port according to a value of the last two bits of the 4-bits PT-RS-DMRS association field based on the predetermined second table.

13. A method (600) for wireless communication performed at a base unit, comprising:
transmitting to the UE, a configuration to configure two phase tracking reference signal, PT-RS, ports for 8 antenna ports uplink, UL, transmission (604), wherein:
if there are two coherent groups, each of which consists of 4 antenna ports, the 4 antenna ports within a first coherent group share a first PT-RS port and the antenna ports within a second coherent group share a second PT-RS port,
if there are four coherent groups, each of which consists of 2 antenna ports, the 4 antenna ports within a first coherent group and a second coherent group share the first PT-RS port and the 4 antenna ports within a third coherent group and a fourth coherent group share the second PT-RS port,
wherein antenna ports within a same coherent group are coherent while antenna ports within different coherent groups are non-coherent,
the first PT-RS port is associated with one of an indicated DMRS port(s) sharing the first PT-RS port according to a value of the first two bits of a 4-bits PT-RS-DMRS association field based on a predetermined second table, and
the second PT-RS port is associated with one of the indicated DMRS port(s) sharing the second PT-RS port according to a value of the last two bits of the 4-bits PT-RS-DMRS association field based on the predetermined second table.

## Patentansprüche

1. Teilnehmergerät, UE, zur drahtlosen Kommunikation, umfassend:
mindestens einen Speicher; und
mindestens einen Prozessor, der mit dem mindestens einen Speicher gekoppelt ist und dazu konfiguriert ist, das UE zu veranlassen zum:
Empfangen einer Konfiguration, um zwei Phasennachführungsreferenzsignal-Ports, PT-RS-Ports, für eine Uplink-Übertragung, UL-Übertragung, von 8 Antennenports (0-7) zu konfigurieren (504), wobei:
wenn zwei kohärente Gruppen vorliegen, von denen jede aus 4 Antennenports besteht, die 4 Antennenports innerhalb einer ersten kohärenten Gruppe einen ersten PT-RS-Port gemeinsam nutzen und die Antennenports innerhalb einer zweiten kohärenten Gruppe einen zweiten PT-RS-Port gemeinsam nutzen,
wenn vier kohärente Gruppen vorliegen, von denen jede aus 2 Antennenports besteht, die 4 Antennenports innerhalb einer ersten kohärenten Gruppe und einer zweiten kohärenten Gruppe den ersten PT-RS-Port gemeinsam nutzen und die 4 Antennenports innerhalb einer dritten kohärenten Gruppe und einer vierten kohärenten Gruppe den zweiten PT-RS-Port gemeinsam nutzen,
wobei Antennenports innerhalb ein und derselben kohärenten Gruppe kohärent sind, während Antennenports innerhalb unterschiedlicher kohärenter Gruppen nicht kohärent sind,
der erste PT-RS-Port mit einem von einem oder mehreren angegebenen DMRS-Ports, die den ersten PT-RS-Port gemeinsam nutzen, gemäß einem Wert der ersten zwei Bits eines 4-Bit-PT-RS-DMRS-Assoziationsfelds auf der Basis einer vorbestimmten zweiten Tabelle assoziiert ist, und
der zweite PT-RS-Port mit einem von dem oder den angegebenen DMRS-Ports, die den zweiten PT-RS-Port gemeinsam nutzen, gemäß einem Wert der letzten zwei Bits des 4-Bit-PT-RS-DMRS-Assoziationsfelds auf der Basis der vorbestimmten zweiten Tabelle assoziiert ist.

2. UE nach Anspruch 1, wobei:
wenn eine Anzahl von kohärenten Gruppen für die 8 Antennenports 2 beträgt, eine berichtete unterstützte maximale Anzahl des oder der PT-RS-Ports 2 beträgt;
wenn die Anzahl von kohärenten Gruppen für die 8 Antennenports 4 beträgt, die berichtete unterstützte maximale Anzahl des oder der PT-RS-Ports 2 oder 4 beträgt; und
wenn die Anzahl von kohärenten Gruppen für die 8 Antennenports 8 beträgt, die berichtete unterstützte maximale Anzahl des oder der PT-RS-Ports 2 oder 4 oder 8 beträgt.

3. UE nach Anspruch 1, wobei:
eine berichtete unterstützte maximale Anzahl 2 oder 4 oder 8 beträgt.

4. UE nach Anspruch 1, wobei:
der mindestens eine Prozessor ferner dazu konfiguriert ist, zu bewirken, dass das UE eine SRS-Konfiguration eines Ressourcensatzes von Resonanzreferenzsignalen, SRS, für Nicht-Codebuch empfängt, wobei der eine SRS-Ressourcensatz aus bis zu 8 SRS-Ressourcen besteht, wobei jede SRS-Ressource mit einem PT-RS-Port konfiguriert ist;
wobei jeder von dem ersten PT-RS-Port und dem zweiten PT-RS-Port von bis zu 4 SRS-Ressourcen innerhalb des einen SRS-Ressourcensatzes gemeinsam genutzt wird;
der erste PT-RS-Port mit einem von dem oder den angegebenen DMRS-Ports, die auf die SRS-Ressourcen abgebildet sind, die mit dem ersten PT-RS-Port angegeben sind, gemäß einem Wert der ersten zwei Bits eines 4-Bit-PT-RS-DMRS-Assoziationsfelds auf der Basis einer vorbestimmten zweiten Tabelle assoziiert ist, und
der zweite PT-RS-Port mit einem von dem oder den angegebenen DMRS-Ports, die auf die SRS-Ressourcen abgebildet sind, die mit dem zweiten PT-RS-Port angegeben sind, gemäß einem Wert der letzten zwei Bits des 4-Bit-PT-RS-DMRS-Assoziationsfelds auf der Basis der vorbestimmten zweiten Tabelle assoziiert ist.

5. UE nach Anspruch 1, wobei:
der mindestens eine Prozessor ferner dazu konfiguriert ist, zu bewirken, dass das UE eine SRS-Konfiguration von mehreren SRS-Ressourcensätzen für Nicht-Codebuch empfängt, wobei eine Anzahl von SRS-Ressourcensätzen für Nicht-Codebuch gleich einer unterstützten maximalen Anzahl von PT-RS-Ports ist;
alle SRS-Ressourcen innerhalb desselben SRS-Ressourcensatzes für Nicht-Codebuch ein und denselben PT-RS-Port gemeinsam nutzen;
wobei der erste PT-RS-Port mit einem von dem oder den angegebenen DMRS-Ports, die auf die SRS-Ressourcen innerhalb des SRS-Ressourcensatzes abgebildet sind, die mit dem ersten PT-RS-Port angegeben sind, gemäß einem Wert der ersten zwei Bits eines 4-Bit-PT-RS-DMRS-Assoziationsfelds auf der Basis einer vorbestimmten zweiten Tabelle assoziiert ist, und
der zweite PT-RS-Port mit einem von dem oder den angegebenen DMRS-Ports, die auf die SRS-Ressourcen innerhalb des SRS-Ressourcensatzes abgebildet sind, die mit dem zweiten PT-RS-Port angegeben sind, gemäß einem Wert der letzten zwei Bits des 4-Bit-PT-RS-DMRS-Assoziationsfelds auf der Basis der vorbestimmten zweiten Tabelle assoziiert ist.

6. Verfahren (500) zur drahtlosen Kommunikation, das an einem Teilnehmergerät, UE, durchgeführt wird, umfassend:
Empfangen einer Konfiguration, um zwei Phasennachführungsreferenzsignal-Ports, PT-RS-Ports, für eine Uplink-Übertragung, UL-Übertragung, von 8 Antennenports (0-7) zu konfigurieren (504), wobei:
wenn zwei kohärente Gruppen vorliegen, von denen jede aus 4 Antennenports besteht, die 4 Antennenports innerhalb einer ersten kohärenten Gruppe einen ersten PT-RS-Port gemeinsam nutzen und die Antennenports innerhalb einer zweiten kohärenten Gruppe einen zweiten PT-RS-Port gemeinsam nutzen,
wenn vier kohärente Gruppen vorliegen, von denen jede aus 2 Antennenports besteht, die 4 Antennenports innerhalb einer ersten kohärenten Gruppe und einer zweiten kohärenten Gruppe den ersten PT-RS-Port gemeinsam nutzen und die 4 Antennenports innerhalb einer dritten kohärenten Gruppe und einer vierten kohärenten Gruppe den zweiten PT-RS-Port gemeinsam nutzen,
wobei Antennenports innerhalb ein und derselben kohärenten Gruppe kohärent sind, während Antennenports innerhalb unterschiedlicher kohärenter Gruppen nicht kohärent sind,
der erste PT-RS-Port mit einem von einem oder mehreren angegebenen DMRS-Ports, die den ersten PT-RS-Port gemeinsam nutzen, gemäß einem Wert der ersten zwei Bits eines 4-Bit-PT-RS-DMRS-Assoziationsfelds auf der Basis einer vorbestimmten zweiten Tabelle assoziiert ist, und
der zweite PT-RS-Port mit einem von dem oder den angegebenen DMRS-Ports, die den zweiten PT-RS-Port gemeinsam nutzen, gemäß einem Wert der letzten zwei Bits des 4-Bit-PT-RS-DMRS-Assoziationsfelds auf der Basis der vorbestimmten zweiten Tabelle assoziiert ist.

7. Basiseinheit zur drahtlosen Kommunikation, umfassend:
mindestens einen Speicher; und
mindestens einen Prozessor, der mit dem mindestens einen Speicher gekoppelt ist und dazu konfiguriert ist, die Basisstation zu veranlassen zum:
Übertragen einer Konfiguration an das UE, um zwei Phasennachführungsreferenzsignal-Ports, PT-RS-Ports, für eine Uplink-Übertragung, UL-Übertragung, von 8 Antennenports (0-7) zu konfigurieren (604), wobei:
wenn zwei kohärente Gruppen vorliegen, von denen jede aus 4 Antennenports besteht, die 4 Antennenports innerhalb einer ersten kohärenten Gruppe einen ersten PT-RS-Port gemeinsam nutzen und die Antennenports innerhalb einer zweiten kohärenten Gruppe einen zweiten PT-RS-Port gemeinsam nutzen,
wenn vier kohärente Gruppen vorliegen, von denen jede aus 2 Antennenports besteht, die 4 Antennenports innerhalb einer ersten kohärenten Gruppe und einer zweiten kohärenten Gruppe den ersten PT-RS-Port gemeinsam nutzen und die 4 Antennenports innerhalb einer dritten kohärenten Gruppe und einer vierten kohärenten Gruppe den zweiten PT-RS-Port gemeinsam nutzen,
wobei Antennenports innerhalb ein und derselben kohärenten Gruppe kohärent sind, während Antennenports innerhalb unterschiedlicher kohärenter Gruppen nicht kohärent sind,
der erste PT-RS-Port mit einem von einem oder mehreren angegebenen DMRS-Ports, die den ersten PT-RS-Port gemeinsam nutzen, gemäß einem Wert der ersten zwei Bits eines 4-Bit-PT-RS-DMRS-Assoziationsfelds auf der Basis einer vorbestimmten zweiten Tabelle assoziiert ist, und
der zweite PT-RS-Port mit einem von dem oder den angegebenen DMRS-Ports, die den zweiten PT-RS-Port gemeinsam nutzen, gemäß einem Wert der letzten zwei Bits des 4-Bit-PT-RS-DMRS-Assoziationsfelds auf der Basis der vorbestimmten zweiten Tabelle assoziiert ist.

8. Basiseinheit nach Anspruch 7, wobei,
wenn eine unterstützte maximale Anzahl der PT-RS-Ports 2 beträgt, die Anzahl von kohärenten Gruppen für die 8 Antennenports 2 oder 4 oder 8 beträgt;
wenn die unterstützte maximale Anzahl der PT-RS-Ports 4 beträgt, die Anzahl von kohärenten Gruppen für die 8 Antennenports 4 oder 8 beträgt; und
wenn die unterstützte maximale Anzahl der PT-RS-Ports 8 beträgt, die Anzahl von kohärenten Gruppen für die 8 Antennenports 8 beträgt.

9. Basiseinheit nach Anspruch 7, wobei:
eine unterstützte maximale Anzahl der PT-RS-Ports 2 oder 4 oder 8 beträgt.

10. Basiseinheit nach Anspruch 7, wobei:
wenn acht kohärente Gruppen vorliegen, von denen jede aus 1 Antennenport besteht, die 4 Antennenports innerhalb einer ersten kohärenten Gruppe, einer zweiten kohärenten Gruppe, einer dritten kohärenten Gruppe und einer vierten kohärenten Gruppe den ersten PT-RS-Port gemeinsam nutzen und die 4 Antennenports innerhalb einer fünften kohärenten Gruppe, einer sechsten kohärenten Gruppe, einer siebten kohärenten Gruppe und einer achten kohärenten Gruppe den zweiten PT-RS-Port gemeinsam nutzen.

11. Basiseinheit nach Anspruch 7, wobei:
der mindestens eine Prozessor ferner dazu konfiguriert ist, eine Konfiguration von Resonanzreferenzsignalen, SRS, eines SRS-Ressourcensatzes für Nicht-Codebuch zu übertragen, wobei der eine SRS-Ressourcensatz aus bis zu 8 SRS-Ressourcen besteht, wobei jede SRS-Ressource mit einem PT-RS-Port konfiguriert ist;
wobei jeder von dem ersten PT-RS-Port und dem zweiten PT-RS-Port von bis zu 4 SRS-Ressourcen innerhalb des einen SRS-Ressourcensatzes gemeinsam genutzt wird;
der erste PT-RS-Port mit einem von dem oder den angegebenen DMRS-Ports, die auf die SRS-Ressourcen abgebildet sind, die mit dem ersten PT-RS-Port angegeben sind, gemäß einem Wert der ersten zwei Bits eines 4-Bit-PT-RS-DMRS-Assoziationsfelds auf der Basis einer vorbestimmten zweiten Tabelle assoziiert ist, und
der zweite PT-RS-Port mit einem von dem oder den angegebenen DMRS-Ports, die auf die SRS-Ressourcen abgebildet sind, die mit dem zweiten PT-RS-Port angegeben sind, gemäß einem Wert der letzten zwei Bits des 4-Bit-PT-RS-DMRS-Assoziationsfelds auf der Basis der vorbestimmten zweiten Tabelle assoziiert ist.

12. Basiseinheit nach Anspruch 7, wobei,
der mindestens eine Prozessor ferner dazu konfiguriert ist, zu bewirken, dass die Basiseinheit eine SRS-Konfiguration von mehreren SRS-Ressourcensätzen für Nicht-Codebuch überträgt, wobei die Anzahl von SRS-Ressourcensätzen für Nicht-Codebuch gleich der unterstützten maximalen Anzahl von PT-RS-Ports ist;
alle SRS-Ressourcen innerhalb desselben SRS-Ressourcensatzes für Nicht-Codebuch ein und denselben PT-RS-Port gemeinsam nutzen;
wobei der erste PT-RS-Port mit einem von dem oder den angegebenen DMRS-Ports, die auf die SRS-Ressourcen innerhalb des SRS-Ressourcensatzes abgebildet sind, die mit dem ersten PT-RS-Port angegeben sind, gemäß einem Wert der ersten zwei Bits eines 4-Bit-PT-RS-DMRS-Assoziationsfelds auf der Basis einer vorbestimmten zweiten Tabelle assoziiert ist, und
der zweite PT-RS-Port mit einem von dem oder den angegebenen DMRS-Ports, die auf die SRS-Ressourcen innerhalb des SRS-Ressourcensatzes abgebildet sind, die mit dem zweiten PT-RS-Port angegeben sind, gemäß einem Wert der letzten zwei Bits des 4-Bit-PT-RS-DMRS-Assoziationsfelds auf der Basis der vorbestimmten zweiten Tabelle assoziiert ist.

13. Verfahren (600) zur drahtlosen Kommunikation, das an einer Basiseinheit durchgeführt wird, umfassend:
Übertragen einer Konfiguration an das UE, um zwei Phasennachführungsreferenzsignal-Ports, PT-RS-Ports, für eine Uplink-Übertragung, UL-Übertragung, von 8 Antennenports zu konfigurieren (604), wobei:
wenn zwei kohärente Gruppen vorliegen, von denen jede aus 4 Antennenports besteht, die 4 Antennenports innerhalb einer ersten kohärenten Gruppe einen ersten PT-RS-Port gemeinsam nutzen und die Antennenports innerhalb einer zweiten kohärenten Gruppe einen zweiten PT-RS-Port gemeinsam nutzen,
wenn vier kohärente Gruppen vorliegen, von denen jede aus 2 Antennenports besteht, die 4 Antennenports innerhalb einer ersten kohärenten Gruppe und einer zweiten kohärenten Gruppe den ersten PT-RS-Port gemeinsam nutzen und die 4 Antennenports innerhalb einer dritten kohärenten Gruppe und einer vierten kohärenten Gruppe den zweiten PT-RS-Port gemeinsam nutzen,
wobei Antennenports innerhalb ein und derselben kohärenten Gruppe kohärent sind, während Antennenports innerhalb unterschiedlicher kohärenter Gruppen nicht kohärent sind,
der erste PT-RS-Port mit einem von einem oder mehreren angegebenen DMRS-Ports, die den ersten PT-RS-Port gemeinsam nutzen, gemäß einem Wert der ersten zwei Bits eines 4-Bit-PT-RS-DMRS-Assoziationsfelds auf der Basis einer vorbestimmten zweiten Tabelle assoziiert ist, und
der zweite PT-RS-Port mit einem von dem oder den angegebenen DMRS-Ports, die den zweiten PT-RS-Port gemeinsam nutzen, gemäß einem Wert der letzten zwei Bits des 4-Bit-PT-RS-DMRS-Assoziationsfelds auf der Basis der vorbestimmten zweiten Tabelle assoziiert ist.

## Revendications

1. Équipement utilisateur (UE) destiné à la communication sans fil, comprenant :
au moins une mémoire ; et
au moins un processeur couplé à l'au moins une mémoire et configuré pour amener l'UE à :
recevoir une configuration permettant de configurer deux ports de signal de référence de suivi de phase, PT-RS, pour une transmission en liaison montante, UL, sur 8 ports d'antenne (0-7) (504), dans laquelle :
s'il existe deux groupes cohérents, chacun composé de 4 ports d'antenne, les 4 ports d'antenne d'un premier groupe cohérent partagent un premier port PT-RS et les ports d'antenne d'un deuxième groupe cohérent partagent un deuxième port PT-RS,
s'il existe quatre groupes cohérents, chacun composés de 2 ports d'antenne, les 4 ports d'antenne d'un premier groupe cohérent et d'un deuxième groupe cohérent partagent le premier port PT-RS et les 4 ports d'antenne d'un troisième groupe cohérent et d'un quatrième groupe cohérent partagent le deuxième port PT-RS,
dans laquelle les ports d'antenne d'un même groupe cohérent sont cohérents, tandis que les ports d'antenne au sein de groupes cohérents différents sont non cohérents,
le premier port PT-RS étant associé à l'un des ports DMRS indiqués partageant le premier port PT-RS, en fonction d'une valeur des deux premiers bits d'un champ d'association PT-RS-DMRS de 4 bits, sur la base d'une deuxième table prédéterminée, et
le deuxième port PT-RS étant associé à l'un des ports DMRS indiqués partageant le deuxième port PT-RS, en fonction d'une valeur des deux derniers bits du champ d'association PT-RS-DMRS de 4 bits, sur la base de la deuxième table prédéterminée.

2. UE selon la revendication 1, dans lequel :
si un nombre de groupes cohérents pour les 8 ports d'antenne est de 2, un nombre maximal pris en charge de ports PT-RS signalé est de 2 ;
si le nombre de groupes cohérents pour les 8 ports d'antenne est de 4, le nombre maximal pris en charge de ports PT-RS signalé est de 2 ou 4 ; et
si le nombre de groupes cohérents pour les 8 ports d'antenne est de 8, le nombre maximal pris en charge de ports PT-RS signalé est de 2, 4 ou 8.

3. UE selon la revendication 1, dans lequel :
un nombre maximal pris en charge signalé est de 2, 4 ou 8.

4. UE selon la revendication 1, dans lequel :
l'au moins un processeur est en outre configuré pour amener l'UE à recevoir une configuration SRS d'un ensemble de ressources de signal de référence de sondage, _SRS, pour un fonctionnement sans livre de codes, dans laquelle ledit ensemble de ressources SRS se compose jusqu'à 8 ressources SRS, chaque ressource SRS étant configurée avec un port PT-RS ;
dans lequel chacun du premier port PT-RS et du deuxième port PT-RS est partagé par jusqu'à 4 ressources SRS au sein dudit ensemble de ressources SRS ;
le premier port PT-RS est associé à l'un des ports DMRS indiqués mappés sur les ressources SRS indiquées avec le premier port PT-RS, en fonction d'une valeur des deux premiers bits d'un champ d'association PT-RS-DMRS de 4 bits, sur la base d'une deuxième table prédéterminée ; et
le deuxième port PT-RS est associé à l'un des ports DMRS indiqués mappés sur les ressources SRS indiquées avec le deuxième port PT-RS, en fonction d'une valeur des deux derniers bits du champ d'association PT-RS-DMRS de 4 bits, sur la base de la deuxième table prédéterminée.

5. UE selon la revendication 1, dans lequel :
l'au moins un processeur est en outre configuré pour amener l'UE à recevoir une configuration SRS de plusieurs ensembles de ressources SRS pour un fonctionnement sans livre de codes, dans laquelle un nombre d'ensembles de ressources SRS pour un fonctionnement sans livre de codes est égal à un nombre maximal pris en charge de ports PT-RS ;
toutes les ressources SRS au sein d'un même ensemble de ressources SRS pour un fonctionnement sans livre de codes partagent un même port PT-RS ;
dans lequel le premier port PT-RS est associé à l'un des ports DMRS indiqués mappés sur les ressources SRS au sein de l'ensemble de ressources SRS indiqué avec le premier port PT-RS, en fonction d'une valeur des deux premiers bits d'un champ d'association PT-RS-DMRS de 4 bits, sur la base d'une deuxième table prédéterminée ; et
le deuxième port PT-RS est associé à l'un des ports DMRS indiqués mappés sur les ressources SRS au sein de l'ensemble de ressources SRS indiqué avec le deuxième port PT-RS, en fonction d'une valeur des deux derniers bits du champ d'association PT-RS-DMRS de 4 bits, sur la base de la deuxième table prédéterminée.

6. Procédé (500) de communication sans fil exécuté au niveau d'un équipement utilisateur, UE, comprenant :
la réception d'une configuration permettant de configurer deux ports de signal de référence de suivi de phase, PT-RS, pour une transmission en liaison montante, UL, sur 8 ports d'antenne (0-7) (504), dans lequel :
s'il existe deux groupes cohérents, chacun composé de 4 ports d'antenne, les 4 ports d'antenne d'un premier groupe cohérent partagent un premier port PT-RS et les ports d'antenne d'un deuxième groupe cohérent partagent un deuxième port PT-RS,
s'il existe quatre groupes cohérents, chacun composé de 2 ports d'antenne, les 4 ports d'antenne d'un premier groupe cohérent et d'un deuxième groupe cohérent partagent le premier port PT-RS et les 4 ports d'antenne d'un troisième groupe cohérent et d'un quatrième groupe cohérent partagent le deuxième port PT-RS,
dans lequel les ports d'antenne au sein d'un même groupe cohérent sont cohérents, tandis que les ports d'antenne au sein de groupes cohérents différents sont non cohérents,
le premier port PT-RS étant associé à l'un des ports DMRS indiqués partageant le premier port PT-RS, en fonction d'une valeur des deux premiers bits d'un champ d'association PT-RS-DMRS de 4 bits, sur la base d'une deuxième table prédéterminée, et
le deuxième port PT-RS étant associé à l'un des ports DMRS indiqués partageant le deuxième port PT-RS, en fonction d'une valeur des deux derniers bits du champ d'association PT-RS-DMRS de 4 bits, sur la base de la deuxième table prédéterminée.

7. Unité de base destinée à la communication sans fil, comprenant :
au moins une mémoire ; et
au moins un processeur couplé à l'au moins une mémoire et configuré pour amener la station de base à :
transmettre à l'UE une configuration permettant de configurer deux ports de signal de référence de suivi de phase, PT-RS, pour une transmission en liaison montante, UL, sur 8 ports d'antenne (0-7) (604), dans laquelle :
s'il existe deux groupes cohérents, chacun composé de 4 ports d'antenne, les 4 ports d'antenne d'un premier groupe cohérent partagent un premier port PT-RS et les ports d'antenne d'un deuxième groupe cohérent partagent un deuxième port PT-RS,
s'il existe quatre groupes cohérents, chacun composé de 2 ports d'antenne, les 4 ports d'antenne d'un premier groupe cohérent et d'un deuxième groupe cohérent partagent le premier port PT-RS et les 4 ports d'antenne d'un troisième groupe cohérent et d'un quatrième groupe cohérent partagent le deuxième port PT-RS,
dans laquelle les ports d'antenne au sein d'un même groupe cohérent sont cohérents, tandis que les ports d'antenne au sein de groupes cohérents différents sont non cohérents,
le premier port PT-RS étant associé à l'un des ports DMRS indiqués partageant le premier port PT-RS, en fonction d'une valeur des deux premiers bits d'un champ d'association PT-RS-DMRS de 4 bits, sur la base d'une deuxième table prédéterminée, et
le deuxième port PT-RS étant associé à l'un des ports DMRS indiqués partageant le deuxième port PT-RS, en fonction d'une valeur des deux derniers bits du champ d'association PT-RS-DMRS de 4 bits, sur la base de la deuxième table prédéterminée.

8. Unité de base selon la revendication 7, dans laquelle,
si le nombre maximal pris en charge de ports PT-RS est de 2, le nombre de groupes cohérents pour les 8 ports d'antenne est de 2, 4 ou 8 ;
si le nombre maximal pris en charge de ports PT-RS est de 4, le nombre de groupes cohérents pour les 8 ports d'antenne est de 4 ou de 8 ; et
si le nombre maximal pris en charge de ports PT-RS est de 8, le nombre de groupes cohérents pour les 8 ports d'antenne est de 8.

9. Unité de base selon la revendication 7, dans laquelle :
un nombre maximal pris en charge de ports PT-RS est de 2, 4 ou 8.

10. Unité de base selon la revendication 7, dans laquelle :
s'il existe huit groupes cohérents, chacun composé d'un port d'antenne, les 4 ports d'antenne d'un premier groupe cohérent, d'un deuxième groupe cohérent, d'un troisième groupe cohérent et d'un quatrième groupe cohérent partagent le premier port PT-RS, et les 4 ports d'antenne d'un cinquième groupe cohérent, d'un sixième groupe cohérent, d'un septième groupe cohérent et d'un huitième groupe cohérent partagent le deuxième port PT-RS.

11. Unité de base selon la revendication 7, dans laquelle :
l'au moins un processeur est en outre configuré pour transmettre une configuration de signal de référence de sondage, SRS, d'un ensemble de ressources SRS pour un fonctionnement sans livre de codes, dans lequel ledit ensemble de ressources SRS comprend jusqu'à 8 ressources SRS, chaque ressource SRS étant configurée avec un port PT-RS ;
dans laquelle chacun du premier port PT-RS et du deuxième port PT-RS est partagé par jusqu'à 4 ressources SRS au sein dudit ensemble de ressources SRS ;
le premier port PT-RS étant associé à l'un des ports DMRS indiqués mappés sur les ressources SRS indiquées avec le premier port PT-RS, en fonction d'une valeur des deux premiers bits d'un champ d'association PT-RS-DMRS de 4 bits, sur la base d'une deuxième table prédéterminée ; et
le deuxième port PT-RS étant associé à l'un des ports DMRS indiqués mappés sur les ressources SRS indiquées avec le deuxième port PT-RS, en fonction d'une valeur des deux derniers bits du champ d'association PT-RS-DMRS de 4 bits, sur la base de la deuxième table prédéterminée.

12. Unité de base selon la revendication 7, dans laquelle :
l'au moins un processeur est en outre configuré pour amener l'unité de base à transmettre une configuration SRS de plusieurs ensembles de ressources SRS pour un fonctionnement sans livre de codes, dans laquelle le nombre d'ensembles de ressources SRS pour un fonctionnement sans livre de codes est égal au nombre maximal pris en charge de ports PT-RS ;
toutes les ressources SRS au sein d'un même ensemble de ressources SRS pour un fonctionnement sans livre de codes partagent un même port PT-RS ;
dans laquelle le premier port PT-RS est associé à l'un des ports DMRS indiqués mappés sur les ressources SRS au sein de l'ensemble de ressources SRS indiqué avec le premier port PT-RS, en fonction d'une valeur des deux premiers bits d'un champ d'association PT-RS-DMRS de 4 bits, sur la base d'une deuxième table prédéterminée ; et
le deuxième port PT-RS étant associé à l'un des ports DMRS indiqués mappés sur les ressources SRS au sein de l'ensemble de ressources SRS indiqué avec le deuxième port PT-RS, en fonction d'une valeur des deux derniers bits du champ d'association PT-RS-DMRS de 4 bits, sur la base de la deuxième table prédéterminée.

13. Procédé (600) de communication sans fil exécuté au niveau d'une unité de base, comprenant :
la transmission à l'UE d'une configuration permettant de configurer deux ports de signal de référence de suivi de phase, PT-RS, pour une transmission en liaison montante, UL, sur 8 ports d'antenne (604), dans laquelle :
s'il existe deux groupes cohérents, chacun composé de 4 ports d'antenne, les 4 ports d'antenne d'un premier groupe cohérent partagent un premier port PT-RS et les ports d'antenne d'un deuxième groupe cohérent partagent un deuxième port PT-RS,
s'il existe quatre groupes cohérents, chacun composé de 2 ports d'antenne, les 4 ports d'antenne d'un premier groupe cohérent et d'un deuxième groupe cohérent partagent le premier port PT-RS et les 4 ports d'antenne d'un troisième groupe cohérent et d'un quatrième groupe cohérent partagent le deuxième port PT-RS,
dans lequel les ports d'antenne au sein d'un même groupe cohérent sont cohérents, tandis que les ports d'antenne au sein de groupes cohérents différents sont non cohérents,
le premier port PT-RS étant associé à l'un des ports DMRS indiqués partageant le premier port PT-RS, en fonction d'une valeur des deux premiers bits d'un champ d'association PT-RS-DMRS de 4 bits, sur la base d'une deuxième table prédéterminée, et
le deuxième port PT-RS étant associé à l'un des ports DMRS indiqués partageant le deuxième port PT-RS, en fonction d'une valeur des deux derniers bits du champ d'association PT-RS-DMRS de 4 bits, sur la base de la deuxième table prédéterminée.
